# EUROPEAN PATENT APPLICATION

(11) **EP 4 614 756 A1**
(43) Date of publication of application: **10.09.2025**
(21) Application number: 23885492.1
(22) Date of filing: 12.10.2023
(51) Int. Cl.: H02J 7/00

(54) **POWER SUPPLY SYSTEM AND PROGRAM**

(30) Priority: 04.11.2022 JP 2022177698
(71) Applicant: DENSO CORPORATION, Kariya-city, Aichi 448-8661 (JP)
(72) Inventor: KURACHI, Taisuke, Kariya-city, Aichi 4488661 (JP); KUBO, Shunichi, Kariya-city, Aichi 4488661 (JP); KAZAOKA, Ryoya, Kariya-city, Aichi 4488661 (JP); KAGAMI, Yoshihiro, Kariya-city, Aichi 4488661 (JP)
(74) Representative: TBK
(86) International application number: PCT/JP2023/037034
(87) International publication number: WO 2024/095729

(57) **Abstract**

A power supply system (30, 230, 330, 430) is connected to both (i) a high-side power supply line (H1) connected to a high-voltage load (71) and (ii) a low-side power supply line (H2) connected to a low-voltage load (72). The power supply system includes a plurality of power storages (31, 32, 33), a switch unit (SWs) for connection-mode switching of the power storages, and a switch controller (100) configured to control the switch unit to set a connection mode of the power storages to one of (i) a first connection mode in which a part or all of the power storages is connected between the high-side power supply line and a low-side ground line (L1), and (ii) a third connection mode in which power supply between the high-side ground line and a low-side ground line (L2) is cut off and a part of the power storages is connected between the low-side power supply line and the low-side ground line.

## Description

### CROSS REFERENCE TO RELATED APPLICATION

This application is based on and claims the benefit of priority from Japanese Patent Application No. 2022-177698 filed on November 4, 2022, the disclosure of which is incorporated in its entirety herein by reference.

### TECHNICAL FIELD

The present disclosure relates to power supply systems and program products.

### BACKGROUND

Known vehicular power supply apparatuses, one of which is disclosed in patent literature 1, include a power storage unit comprised of a plurality of power storages. Such a vehicular power supply apparatus is configured to cut off power transmission between a high-voltage side of the power storage unit and a low-voltage side of the power storage unit in response to determination that there is an anomaly in the high-voltage side of the power storage unit, and supply power to one or more low-voltage loads from one or more power storages in the low-voltage side of the power storage unit. This reliably maintains power supply to the one or more low-voltage loads.

### CROSS-REFERENCES

Patent Literature 1 Japanese Patent Application Publication No. 2018-148733

### SUMMARY

Unfortunately, the circuit configuration of the power conversion apparatus disclosed in patent literature 1 may not perform (i) cutoff of power transmission between the high- and low-voltage sides of the power storage unit, and supply power to the one or more low-voltage loads from the one or more power storages in the low-voltage side of the power storage unit while supplying power to one or more high-voltage loads from one or more power storages in the high-voltage side of the power storage unit.

From the above viewpoint, the present disclosure seeks to provide power supply systems and program products, each of which is capable of flexibly selecting at least one of power sources to be used.

A first exemplary aspect of the present disclosure provides a power supply system connected to both (i) a high-side power supply line connected to a high-voltage load and (ii) a low-side power supply line connected to a low-voltage load. The power supply system includes a plurality of power storages, a switch unit for connection-mode switching of the power storages, and a switch controller configured to control the switch unit to set a connection mode of the power storages to one of (I) a first connection mode in which a part or all of the power storages is connected between the high-side power supply line and a low-side ground line, and (II) a third connection mode in which power supply between the high-side ground line and a low-side ground line is cut off and a part of the power storages is connected between the low-side power supply line and the low-side ground line.

This configuration of the power supply system makes it possible to flexibly select at least one of power sources to be used.

A second exemplary aspect of the present disclosure provides a program product applicable to a power supply system connected to both (i) a high-side power supply line connected to a high-voltage load and (ii) a low-side power supply line connected to a low-voltage load. The power supply system includes a control apparatus. The program product includes program instructions that cause the control apparatus to perform a switching routine that controls a switch unit for connection-mode switching of the power storages to accordingly set a connection mode of the power storages to one of (I) a first connection mode in which a part or all of the power storages is connected between the high-side power supply line and a low-side ground line, and (II) a third connection mode in which power supply between the high-side ground line and a low-side ground line is cut off and a part of the power storages is connected between the low-side power supply line and the low-side ground line.

This configuration of the program product makes it possible to flexibly select at least one of power sources to be used.

### BRIEF DESCRIPTION OF THE DRAWINGS

Other aspects of the present disclosure will become apparent from the following description of embodiments with reference to the accompanying drawings in which:
Fig. 1 is a structural diagram of a power supply system according to the first embodiment;
Fig. 2 is a circuit diagram illustrating a first series-connection mode of the power supply system;
Fig. 3 is a circuit diagram illustrating a first parallel-connection mode of the power supply system;
Fig. 4 is a circuit diagram illustrating a second connection mode of the power supply system;
Fig. 5 is a circuit diagram illustrating a third connection mode of the power supply system;
Fig. 6 is a flowchart illustrating a normal mode-switching routine;
Fig. 7 is a circuit diagram illustrating the second connection mode of the power supply system;
Fig. 8 is a circuit diagram illustrating the first series-connection mode of the power supply system;
Fig. 9 is a circuit diagram illustrating the first parallel-connection mode of the power supply system;
Fig. 10 is a flowchart illustrating a stop-state equalization routine;
Fig. 11 is a structural diagram of a power supply system according to the second embodiment;
Fig. 12 is a circuit diagram illustrating the first series-connection mode of the power supply system according to the second embodiment;
Fig. 13 is a circuit diagram illustrating the first parallel-connection mode of the power supply system according to the second embodiment;
Fig. 14 is a circuit diagram illustrating the second connection mode of the power supply system according to the second embodiment;
Fig. 15 is a structural diagram of a power supply system according to the third embodiment;
Fig. 16 is a circuit diagram illustrating the first connection mode of the power supply system according to the third embodiment;
Fig. 17 is a circuit diagram illustrating the second connection mode of the power supply system according to the third embodiment;
Fig. 18 is a structural diagram of a power supply system according to the fourth embodiment;
Fig. 19 is a circuit diagram illustrating the first connection mode of the power supply system according to the fourth embodiment;
Fig. 20 is a circuit diagram illustrating the second connection mode of the power supply system according to the fourth embodiment;
Fig. 21 is a structural diagram of a power supply system according to the first modification;
Fig. 22 is a flowchart illustrating an anomaly mode-switching routine according to the first modification;
Fig. 23 is a circuit diagram illustrating the third connection mode of the power supply system according to the second modification;
Fig. 24 is a circuit diagram illustrating the second connection mode of the power supply system according to the second modification;
Fig. 25 is a flowchart illustrating an equalization routine according to the second modification;
Fig. 26 is a flowchart illustrating an equalization routine according to the third modification;

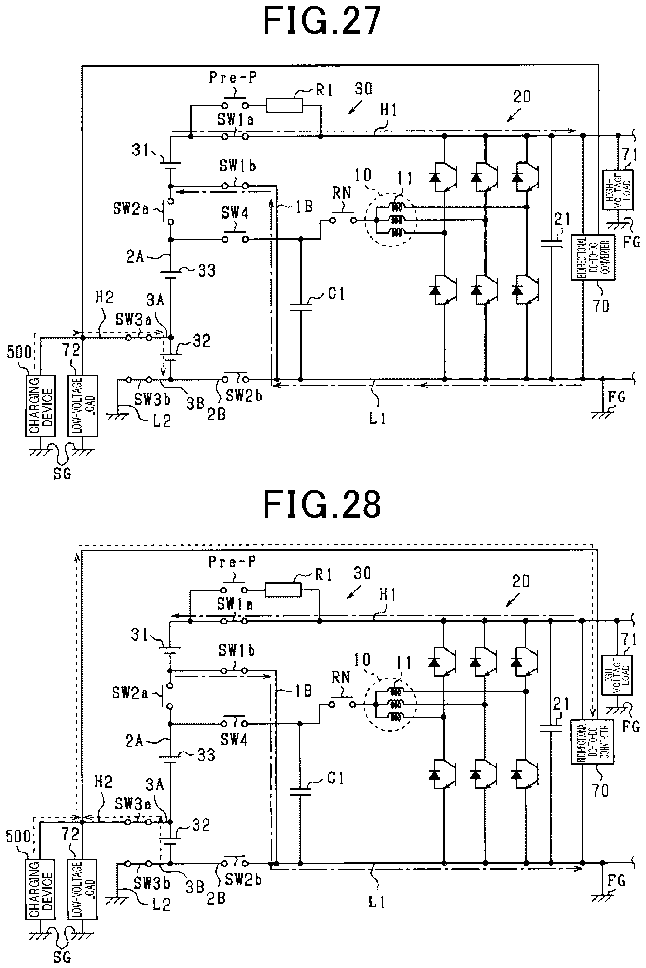

Fig. 27 is a structural diagram of a power supply system according to the fourth modification;
Fig. 28 is a structural diagram of the power supply system according to the fourth modification;
Fig. 29 is a flowchart illustrating an equalization routine according to the fourth modification;
Fig. 30 is a structural diagram of a power supply system according to the fifth modification;
Fig. 31 is a structural diagram of a power supply system according to the sixth modification;
Fig. 32 is a structural diagram of a power supply system according to the seventh modification;
Fig. 33 is a structural diagram of a power supply system according to the eighth modification;
Fig. 34 is a structural diagram of a power supply system according to another modification;
Fig. 35 is a structural diagram of a power supply system according to a further modification;
Fig. 36 is a structural diagram of a power supply system according to a still further modification;
Fig. 37 is a structural diagram of a power supply system according to a still further modification;
Fig. 38 is a structural diagram of a power supply system according to a still further modification;
Fig. 39 is a structural diagram of a power supply system according to a still further modification;
Fig. 40 is a structural diagram of a power supply system according to a still further modification;
Fig. 41 is a structural diagram of a power supply system according to a still further modification;
Fig. 42 is a structural diagram of a power supply system according to a still further modification;
Fig. 43 is a structural diagram of a power supply system according to a still further modification;
Fig. 44 is a structural diagram of a power supply system according to a still further modification;
Fig. 45 is a structural diagram of a power supply system according to a still further modification;
Fig. 46 is a structural diagram of a power supply system according to a still further modification;
Fig. 47 is a structural diagram of a power supply system according to a still further modification;
Fig. 48 is a structural diagram of a power supply system according to a still further modification;
Fig. 49 is a structural diagram of a power supply system according to a still further modification;
Fig. 50 is a structural diagram of a power supply system according to a still further modification;
Fig. 51 is a structural diagram of a power supply system according to a still further modification;
Fig. 52 is a structural diagram of a power supply system according to a still further modification;
Fig. 53 is a structural diagram of a power supply system according to a still further modification;
Fig. 54 is a structural diagram of a power supply system according to a still further modification;
Fig. 55 is a structural diagram of a power supply system according to a still further modification;
Fig. 56 is a structural diagram of a power supply system according to a still further modification; and
Fig. 57 is a structural diagram of a power supply system according to a still further modification.

### DETAILED DESCRIPTION OF EMBODIMENTS

The following describes plural embodiments with reference to the accompanying drawings. Parts of the embodiments functionally or structurally corresponding to each other or associated with each other will be denoted by the same reference numbers or by reference numbers which are different in the hundreds place from each other. The corresponding or associated parts can refer to the corresponding descriptions in the other embodiments.

### First embodiment

The following describes the first embodiment, which is created by implementing one of power supply systems according to the present disclosure, with reference to the accompanying drawings.

A power conversion system according to the first embodiment is installed in a vehicle, such as an electric vehicle or a hybrid vehicle, to constitute a vehicular system.

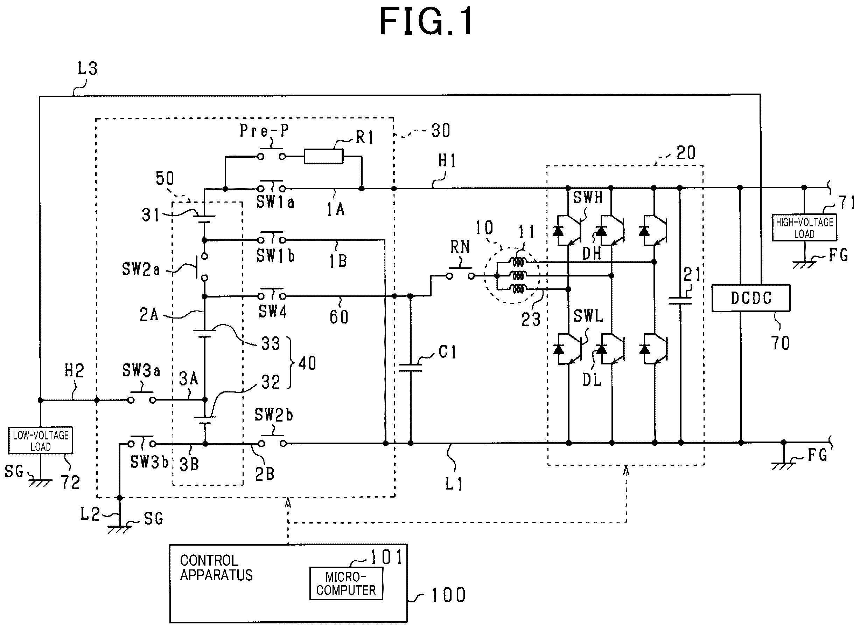

The vehicular system includes, as illustrated in Fig. 1, a motor 10, an inverter 20, a high-side power supply line H1, a high-side ground line L1, a low-side power supply line H2, a low-side ground line L2, a power supply system 30, and a direct-current (DC)-to-DC converter 70 that serves as a voltage converter.

The motor 10 includes a plurality of armature windings. Specifically, the motor 10 of the first embodiment is configured as a three-phase synchronous machine, and includes an unillustrated rotor and three-phase (UVW-phase) armature windings 11 connected in star configuration. The UVW-phase armature windings 11 are arranged to have a phase difference of 120 electrical degrees from each other. The motor 10 is, for example, configured as a permanent magnet synchronous machine. The rotor of the motor 10 is configured to transmit and receive power to and from one or more driving wheels of the vehicle. This therefore enables the motor 10 to serve as a torque generator for generating torque that propels the vehicle.

The inverter 20 includes three-phase (UVW-phase) series-connected switch units for the respective three-phases of the motor 10; the series-connected switch unit for each of the U-, V-, and W-phases is comprised of an upper-arm switch SWH and a lower-arm switch SWL connected in series to each other. An upper-arm diode DH, which serves as a free wheel diode, is connected in antiparallel to the upper-arm switch SWH of each phase, and a lower-arm diode DL, which serves as a free wheel diode, is connected in antiparallel to the lower-arm switch SWL of each phase. The first embodiment uses, as each of the upper- and lower-arm switches, an Insulated Gate Bipolar Transistor (IGBT).

The inverter 20 includes a smoothing capacitor 21 that has a high-side terminal and a low-side terminal. The high-side terminal of the smoothing capacitor 21 is connected to the high-side power supply line H1, and the low-side terminal of the smoothing capacitor 21 is connected to the high-side ground line L1. The smoothing capacitor 21 may be arranged outside the inverter 20.

The emitter, which serves as a low-side terminal, of the upper-arm switch SWH of each phase is connected to the collector, which serves as a high-side terminal, of the lower-arm switch SWL of the corresponding phase. The connection point between the emitter of the upper-arm switch SWH of each phase and the collector of the lower-arm switch SWL of the corresponding phase is connected to a first end of the corresponding phase armature winding 11 through a conductor, such as a busbar, 23. The second ends of the respective three-phase armature windings 11 are connected to a neutral point.

The number of turns of each phase armature winding 11 is set to a predetermined constant value, so that, for example, the inductance of each phase armature winding 11 is set to a predetermined constant value.

The collector of each-phase upper-arm switch SWH is connected to the high-side power supply line H1, and the emitter of each-phase lower-arm switch SWL is connected to the high-side ground line L1. The high-side ground line L1 is connected to a frame ground FG, such as the body of the vehicle. This results in the motor 10 being connected to the high-side power supply line H1 through the inverter 20. Both the motor 10 and the inverter 10 or any one of the motor 10 and the inverter 10 may be included in the power supply system 30 or cannot be included in the power supply system 30.

Various high-voltage loads 71 are connected between the high-side power supply line H1 and the high-side ground line L1. The high-voltage loads, such as an air compressor, 71 are electrical loads having a request voltage with a high level. The motor 10 may be a type of the high-voltage loads 71.

Various low-voltage loads 72 are connected between the low-side power supply line H2 and the low-side ground line L2. The low-voltage loads, such as various control units, for example, various electronic control units (ECUs), are electrical loads having a request voltage with a low level lower than the level of the request voltage for the high-voltage loads 71. The low- side ground line L2 is connected to a signal ground SG. The signal ground SG is electrically isolated from the frame ground FG.

The DC-to-DC converter 70 is operative to perform voltage conversion of power inputted thereto. The DC-to-DC converter 70 is connected between the high-side power supply line H1 and the high-side ground line L1. The DC-to-DC converter 70 is configured to step down a voltage of power inputted thereto from the high-side power supply line H1 into a lower voltage, and supply the lower voltage of the inputted power through a power transmission line L3 to, for example, the low-voltage loads 72 connected to the low-side power supply line H2. Additionally, the DC-to-DC converter 70 is configured to step up a voltage of power inputted thereto from the low-side power supply line H2 through the power transmission line L3 into a higher voltage, and supply the higher voltage of the inputted power to, for example, the high-voltage loads 71 connected to the high-side power supply line H1. The DC-to-DC converter 70 may be controlled by a control apparatus 100 described later. The DC-to-DC converter 70 may be included in the power supply system 30 or cannot be included in the power supply system 30. The DC-to-DC converter 70 of the first embodiment may be configured not to perform the voltage step-up function set forth above.

Next, the following describes the power supply system 30.

The power supply system 30 includes a first battery 31 serving as a first power storage, a second battery 32 serving as a second power storage, and a third battery 33 serving as a third power storage.

Each of the first to third batteries 31 to 33 serves as a power storage for rotatably driving the rotor of the motor 10.

Each of the first to third batteries 31 to 33 is a battery pack configured as a series module comprised of a plurality of battery cells, i.e., unit cells, connected in series to each other. For example, a secondary battery cell, such as a lithium-ion cell, may be used as each battery cell.

Each of the first to third batteries 31 to 33 has an output voltage, and the output voltage of the first battery 31 is the highest in all the output voltage of the first to third batteries 31 to 33. The output voltage of the first battery 31 is, for example, 400 V. The output voltage of the second battery 32, which is lower than the output voltage of the first battery 31, is, for example, 12 V. The output voltage of the third battery 33 has any voltage of, for example, 200 V. The terminal voltage across each of the first to third batteries 31 to 33 may be freely changed.

The power supply system 30 includes a first-A electrical path 1A connecting between the positive terminal of the first battery 31 and the high-side power supply line H1. The power supply system 30 includes a first-A switch SW1a mounted on the first-A electrical path 1A. The first-A switch SW1a is configured to switch between (i) electrical conduction through the first-A electrical path 1A and (ii) electrical cutoff therethrough to be switched therebetween.

A series module comprised of a pre-charge switch Pre-P and a resistor R1 connected in series to each other may be connected in parallel to the first-A switch SW1a. The first-A switch SW1a serves as a high-side system main relay switch.

The power supply system 30 includes a first-B electrical path 1B connecting between the negative terminal of the first battery 31 and the high-side ground line L1. The power supply system 30 includes a first-B switch SW1b mounted on the first-B electrical path 1B. The first-B switch SW1b enables (i) electrical conduction through the first-B electrical path 1B and (ii) electrical cutoff therethrough to be switched therebetween.

The power supply system 30 includes a second-A electrical path 2A connecting between the negative terminal of the first battery 31 and the positive terminal of a first series-connection module 40; the first series-connection module 40 is comprised of the second battery 32 and the third battery 33 connected in series to each other. The power supply system 30 includes a second-A switch SW2a mounted on the second-A electrical path 2A. The second-A switch SW2a enables (i) electrical conduction through the second-A electrical path 2A and (ii) electrical cutoff therethrough to be switched therebetween. In other words, the second-A switch SW2a enables one of (i) electrical connection between the negative terminal of the first battery 31 and the positive terminal of a first series-connection module 40 and (ii) electrical cutoff therebetween to be switched to the other thereof.

The first series-connection module 40 is configured such that the negative terminal of the third battery 33 is connected in series to the positive terminal of the second battery 32. The positive terminal of the first series-connection module 40 corresponds to the positive terminal of the third battery 33, and the negative terminal of the first series-connection module 40 corresponds to the negative terminal of the second battery 32.

The power supply system 30 includes a second-B electrical path 2B connecting between the negative terminal of the first battery 31 and the high-side ground line L1. The power supply system 30 includes a second-B switch SW2b mounted on the second-B electrical path 2B. The second-B switch SW2b enables (i) electrical conduction through the second-B electrical path 2B and (ii) electrical cutoff therethrough to be switched therebetween. In other words, the second-B switch SW2b enables one of (i) electrical connection between the negative terminal of the first battery 31 and the high-side ground line L1 and (ii) electrical cutoff therebetween to be switched to the other thereof. The second-B switch SW1a serves as a low-side system main relay switch.

The power supply system 30 includes a third-A electrical path 3A connecting between the positive terminal of the second battery 32 and the low-side power supply line H2. The power supply system 30 includes a third-A switch SW3a mounted on the third-A electrical path 3A. The third-A switch SW3a enables (i) electrical conduction through the third-A electrical path 3A and (ii) electrical cutoff therethrough to be switched therebetween.

The power supply system 30 includes a third-B electrical path 3B connecting between the negative terminal of the second battery 32 and the low-side ground line L2. The power supply system 30 includes a third-B switch SW3b mounted on the third-B electrical path 3B. The third-B switch SW3b enables (i) electrical conduction through the third-B electrical path 3B and (ii) electrical cutoff therethrough to be switched therebetween.

The power supply system 30 includes a bypass path 60 connecting between the neural point of the armature windings 11 of the motor 10 and the positive terminal of the first series-connection module 40. The power supply switch 30 includes a fourth switch SW4 mounted on the bypass path 60. The bypass switch SW4 enables (i) electrical conduction through the bypass path 60 and (ii) electrical cutoff therethrough to be switched therebetween. The power supply system 30 includes a switch RN mounted on the bypass switch SW4 adjacently to the neutral point. The switch RN is controlled to be turned on when the fourth switch SW4 is controlled to be turned on. The power supply system 30 includes a capacitor C1 arranged between the bypass path 60 and the high-side ground line L1.

A mechanical relay is used as each of the switches SW1a, SW1b, SW2a, SW2b, SW3a, SW3b, and SW4 according to the first embodiment. These switches will also be collectively referred to as switches SW. Each switch SW is configured to enable a current to bidirectionally pass therethrough when turned on, and each switch SW is configured to bidirectionally cut off the current therethrough when turned off. Each switch SW is not limited to such a mechanical relay. Specifically, a semiconductor switching device may be used as each switch SW. One or more of the switches SW1a, SW1b, SW2a, SW2b, SW3a, SW3b, and SW4 serve as a switch unit.

The power supply system 30 includes a control apparatus 100.

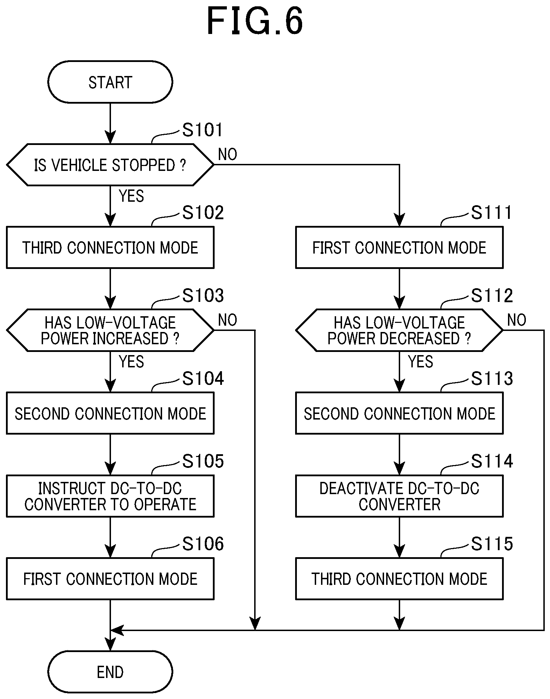

The control apparatus 100 is comprised mainly of a microcomputer 101 that includes, for example, a Central Processing Unit (CPU), at least one read-only memory (ROM), and at least one random access memory (RAM). Functions provided by the microcomputer 101 can be implemented by software stored in a non-transitory storage medium and one or more computers that runs the software, only software, only one or more hardware devices, or the combination of software and one or more hardware devices. For example, if the microcomputer 101 is comprised of electronic circuits as hardware devices, the functions of the microcomputer 101 can be implemented by digital circuits including many logic circuits or analog circuits. For example, the microcomputer 101 is configured to execute programs stored in a storage unit, such as a non-transitory tangible storage medium. The programs include processing programs illustrated in Fig. 6 and other figures described later. Execution of the programs stored in the storage unit enables methods corresponding to the programs to be carried out. The storage unit is for example comprised of a non-volatile memory device. The programs stored in the storage unit can be updated through communication networks, such as an Over-The-Air (OTA) network or the Internet.

Information items, such as measurements of various sensors, are inputted to the control apparatus 100. The various sensors include, for example, voltage sensors, each of which is configured to measure a terminal voltage across a corresponding one of the first, second, and third batteries 31, 32, and 33. The various sensors include, for example, current sensors, each of which is configured to measure a current flowing through a corresponding one of the first, second, and third batteries 31, 32, and 33. The various sensors include, for example, a rotational angle sensor for measuring a rotational angle, such as a rotational electric angle, of the rotor of the motor 10, and phase current sensors, each of which is configured to measure a current flowing through a corresponding one of the three-phase armature windings 11.

The control apparatus 100 is configured to perform, based on measurements of the above various sensors and other information items, various tasks in accordance with programs stored therein. The various tasks include a task for controlling the inverter 20. Specifically, the control apparatus 100 is configured to perform a switching control task for the switches SWH and SWL constituting the inverter 20 to accordingly control a controlled variable, such as torque, of the motor 10 to be fed back to a target value for the controlled variable. That is, the switching control task alternately turns on the upper- and lower-arm switches SWH and SWL for each phase to accordingly control the controlled variable, such as torque, of the motor 10 to be fed back to the target value for the controlled variable. The above feedback control task causes rotary power of the rotor of the motor 10 to be transmitted to the driving wheels of the vehicle, resulting in the vehicle traveling. That is, the control apparatus 100 serves as an inverter controller.

The control apparatus 100 is configured to control the DC-to-DC converter 70 to accordingly perform a voltage conversion task set forth above. Additionally, the control apparatus 100 is configured to determine whether power supply from a power supply unit 80 is successfully performed described later. For this reason, the control apparatus 100 serves as an anomaly determiner.

Additionally, the control apparatus 100 serves as a switch controller for performing on-off control operations of each switch SW of the power supply system 30.

The following describes how the control apparatus 100 of the first embodiment performs on-off controls of each switch SW of the power supply system 30.

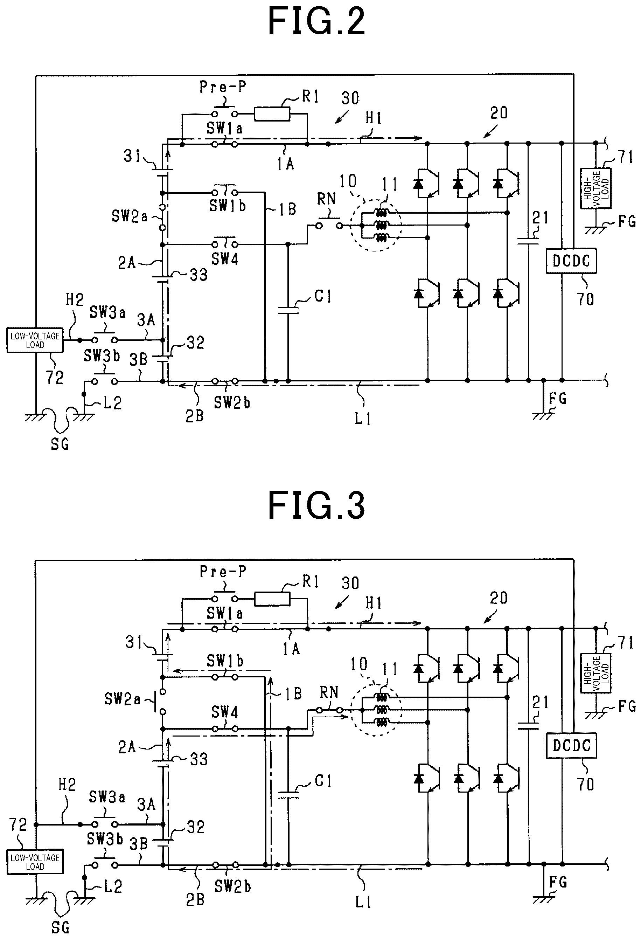

The control apparatus 100 is configured to set, as illustrated in Figs. 2 and 3, a connection mode of the power storages, i.e., the first to third batteries 31, 32, and 33, to a first connection mode in which a part or all of the first to third batteries 31 to 33 included in the power supply system 30 is connected to only the high-side power supply line H1. That is, the control apparatus 100 according to the first embodiment is configured to connect all the first to third batteries 31 to 33 included in the power supply system 30 to the high-side power supply line H1 to accordingly establish the first connection mode. In particular, the control apparatus 100 according to the first embodiment is configured to select, as the first connection mode, one of a first series-connection mode and a first parallel-connection mode, and establish the selected one of the first series-connection mode and the first parallel-connection mode.

The first series-connection mode represents a mode in which the first battery 31, the third battery 33, and the second battery 32 are connected in series to one another to constitute a second series-connection module 50, and the second series-connection module 50 is connected to the high-side power supply line H1.

Specifically, the control apparatus 100 is configured to, as illustrated in Fig. 2, turn off or maintain in the off state each of the first-B switch SW1b, the third-A switch SW3a, the third-B switch SW3b, and the fourth switch SW4 and turn on or maintain in the on state the first-A switch SW1a, the second-A switch SW2a, and the second-B switch SW2b to accordingly establish the first series-connection mode as the first connection mode.

The first series-connection mode results in the second series-connection module 50 being connected between the high-side power supply line H1 and the high-side ground line L1; the second series-connection module 50 is comprised of the first, third, and second batteries 31, 33, and 32 being connected in series to each other. That is, as illustrated by a dash-dotted line in Fig. 2, high-voltage power having the sum of 400 V, 200 V, and 12 V is supplied from the second series-connection module 50 to the high-voltage loads 71 through the high-side power supply line H1. Fig. 2 clearly illustrates that no power is directly supplied from the second battery 32 to the low-voltage loads 72 through the low-side power supply line H2.

The first parallel-connection mode represents a mode in which the first battery 31 and the first series-connection module 40 are connected in parallel to the high-side power supply line H1.

Specifically, the control apparatus 100 is configured to, as illustrated in Fig. 3, turn off or maintain in the off state each of the second-A switch SW2a, the third-A switch SW3a, and the third-B switch SW3b, and turn on or maintain in the on state the first-A switch SW1a, the first-B switch SW1b, the second-B switch SW2b, and the fourth switch SW4 to accordingly establish the first parallel-connection mode as the first connection mode.

The first parallel-connection mode results in (i) the first battery 31 being connected between the high-side power supply line H1 and the high-side ground line L1 and (ii) the first series-connection module 40 being connected between the neutral point of the motor 10 and the high-side ground line L1. That is, the first battery 31 and the first series-connection module 40 are connected in parallel to the high-side power supply line H1, so that high-voltage power is supplied from the first battery 31 to the high-voltage loads 71 through the high-side power supply line H1, and high-voltage power is supplied from the first series-connection module 40 to the high-voltage loads 71 through the high-side power supply line H1.

The terminal voltage, which is the sum of 12 V and 200 V, across the first series-connection module 40 comprised of the second and third batteries 32 and 33 is lower than the terminal voltage of 400 V across the first battery 31. The control apparatus 100 is configured to control on-off operations of the switches SWH and SWL of each phase of the inverter 20 to accordingly boost the terminal voltage across the first series-connection module 40 is boosted by the motor 10 and the inverter 20, and thereafter the boosted voltage is supplied to the high-side power supply line H1.

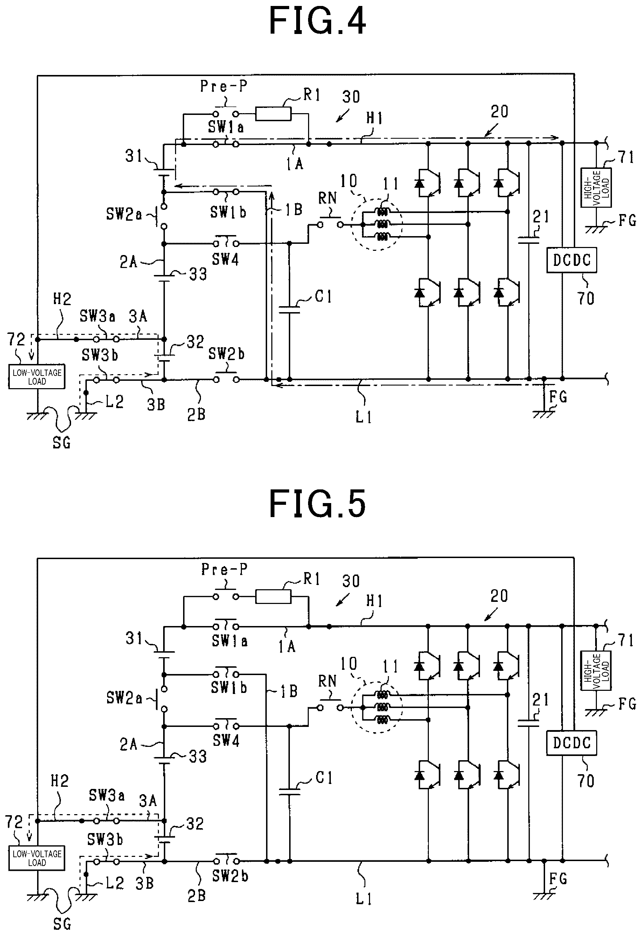

The control apparatus 100 is configured to set, as illustrated in Fig. 4, the connection mode of the batteries 31 to 33 to a second connection mode in which a part of the first to third batteries 31 to 33, such as the second battery 32, included in the power supply system 30 is connected to the low-side power supply line H2 and a part or all of the remaining batteries, such as the first battery 31, is connected to the high-side power supply line H1.

Specifically, the control apparatus 100 is configured to, as illustrated in Fig. 4, turn off or maintain in the off state each of the second-A switch SW2a, the second-B switch SW2b, and the fourth switch SW4, and turn on or maintain in the on state the first-A switch SW1a, the first-B switch SW1b, the third-A switch SW3a, and the third-B switch SW3b to accordingly establish the second connection mode.

The second connection mode results in the first battery 31 being connected between the high-side power supply line H1 and the high-side ground line L1, and the second battery 32 being connected between the low-side power supply line H2 and the low-side ground line L2. In the second connection mode, the high-side ground line L1 and the low-voltage ground line L2 are electrically isolated from one another. This results in high-voltage power being supplied from the first battery 31 to the high-voltage loads 71 through the high-side power supply line H1, and low-voltage power being supplied from the second battery 32 to the low-voltage loads 72 through the low-side power supply line H2.

The control apparatus 100 is configured to set, as illustrated in Fig. 5, the connection mode of the batteries 31 to 33 to a third connection mode in which a part of the first to third batteries 31 to 33, such as the second battery 32, included in the power supply system 30 is only connected to the low-side power supply line H2.

Specifically, the control apparatus 100 is configured to, as illustrated in Fig. 5, turn off or maintain in the off state each of the first-A switch SW1a, the first-B switch SW1b, the second-A switch SW2a, the second-B switch SW2b, and the fourth switch SW4, and turn on or maintain in the on state the third-A switch SW3a and the third-B switch SW3b to accordingly establish the third connection mode. This results in, in the third connection mode, low-voltage power being supplied from the second battery 32 to the low-voltage loads 72 through the low-side power supply line H2. Fig. 5 shows that no power is supplied from the first battery 31 to the high-voltage loads 71 through the high-side power supply line H1.

In the second connection mode illustrated in Fig. 4, power supply between the high-side ground line L1 and the low-side ground line L2 is cut off, and a part of the first to third batteries 31 to 33, such as the second battery 32, is connected between the low-side power supply line H2 and the low-side ground line L2. For this reason, the second connection mode is one type of the third connection mode.

Hereinafter, the connection configuration illustrated in Fig. 5 will be referred to as the third connection mode, and the connection configuration illustrated in Fig. 4 will be referred to as the second connection mode.

Next, the following describes mode-switching routines carried out by the control apparatus 100 for switchably selecting one of the first to third connection modes as the connection mode of the batteries 31 to 33.

First, the following describes a normal mode-switching routine, which is carried out in a normal situation with reference to Fig. 6. The control apparatus 100 is programmed to execute the normal mode-switching routine every predetermined period.

Referring to Fig. 6, when starting the normal mode-switching routine, the control apparatus 100 determines whether the vehicle is stopped, i.e., the vehicle is in an ignition-off period in which the ignition switch of the vehicle is in the off state in step S101.

Upon determination that the vehicle is stopped (YES in step S101), the control apparatus 100 sets the connection mode of the batteries 31 to 33 to the third connection mode in step S102. Specifically, if the connection mode of the batteries 31 to 33 has been the third connection mode before execution of the normal mode-switching routine, the control apparatus 100 continues the third connection mode. Otherwise, if the connection mode of the batteries 31 to 33 has not been the third connection mode, the control apparatus 100 changes the connection mode of the batteries 31 to 33 to the third connection mode.

Specifically, in step S102, the control apparatus 100 turns off or maintains in the off state each of the first-A switch SW1a, the first-B switch SW1b, the second-A switch SW2a, the second-B switch SW2b, and the fourth switch SW4, and tuns on or maintains in the on state the third-A switch SW3a and the third-B switch SW3b to accordingly establish the third connection mode. This results in, in the third connection mode, low-voltage power being supplied from the second battery 32 to the low-voltage loads 72 through the low-side power supply line H2.

Next, the control apparatus 100 determines whether the vehicle has started so that the consumed power of the low-voltage loads 72 has exceeded a predetermined first power threshold in step S103. The first power threshold is set to any value determined based on a power level that can be outputted by the second battery 32.

Upon determination that the consumed power of the low-voltage loads 72 has not increased over the predetermined first power threshold (NO in step S103), the control apparatus 100 terminates the normal mode-switching routine.

Otherwise, upon determination that the consumed power of the low-voltage loads 72 has increased over the predetermined first power threshold (YES in step S103), the control apparatus 100 changes the connection mode of the batteries 31 to 33 from the third connection mode to the second connection mode in step S104.

Specifically, in step S104, the control apparatus 100 turns off or maintains in the off state each of the second-A switch SW2a, the second-B switch SW2b, and the fourth switch SW4, and tuns on or maintains in the on state the first-A switch SW1a, the first-B switch SW1b, the third-A switch SW3a, and the third-B switch SW3b to accordingly establish the second connection mode.

The second connection mode results in (i) the first battery 31 being connected between the high-side power supply line H1 and the high-side ground line L1 and (ii) the second battery 32 being connected between the low-side power supply line H2 and the low-side ground line L2 while the high-side ground line L1 and the low-voltage ground line L2 are electrically isolated from one another.

This enables high-voltage power to be supplied from the first battery 31 to the DC-to-DC converter 70 through the high-side power supply line H1. Additionally, low-voltage power is supplied from the second battery 32 to the low-voltage loads 72 through the low-side power supply line H2.

Next, the control apparatus 100 instructs the DC-to-DC converter 70 to convert, i.e., step down, an input voltage inputted thereto from the first battery 31 through the high-side power supply line H1 in step S105. This results in power with the stepped-down voltage being supplied from the DC-to-DC converter 70 to the low-voltage loads 72 through the power transmission line L3.

Following the operation in step S105, the control apparatus 100 changes the connection mode of the batteries 31 to 33 from the second connection mode to the first connection mode in step S106. Specifically, the control apparatus 100 changes the connection mode of the batteries 31 to 33 from a selected one of the first series-connection mode and the first parallel-connection mode as the first connection mode in step S106.

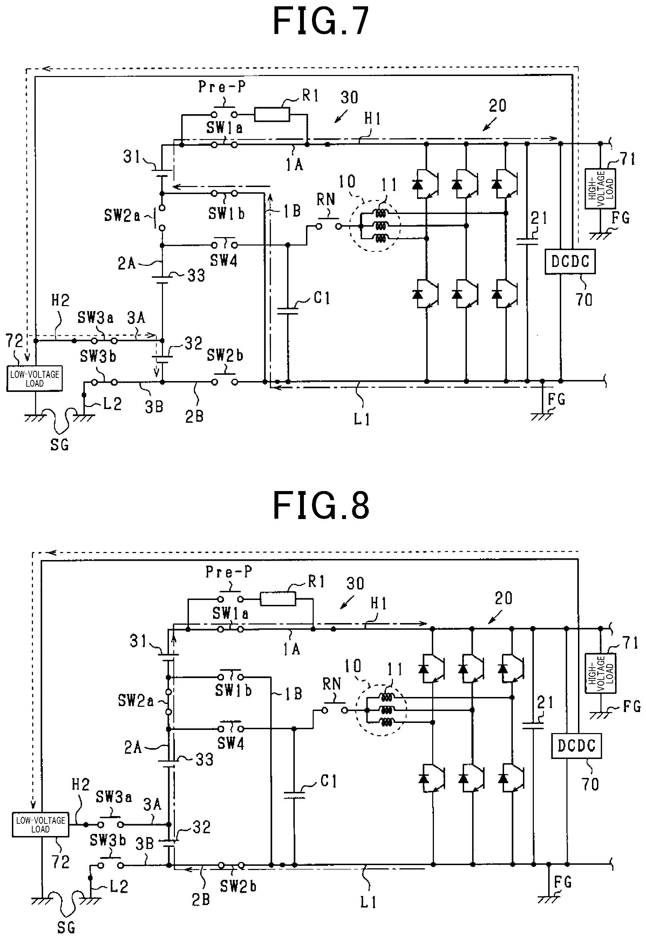

When selecting the first series-connection mode as the first connection mode, the control apparatus 100 turns off or maintains in the off state each of the first-B switch SW1b, the third-A switch SW3a, the third-B switch SW3b, and the fourth switch SW4 and turns on or maintains in the on state the first-A switch SW1a, the second-A switch SW2a, and the second-B switch SW2b to accordingly establish the first series-connection mode as the first connection mode. The first series-connection mode results in, as illustrated in Fig. 8, the second series-connection module 50 being connected between the high-side power supply line H1 and the high-side ground line L1.

Alternatively, when selecting the first parallel connection mode as the first connection mode, the control apparatus 100 turns off or maintains in the off state each of the second-A switch SW2a, the third-A switch SW3a, and the third-B switch SW3b, and turns on or maintains in the on state the first-A switch SW1a, the first-B switch SW1b, the second-B switch SW2b, and the fourth switch SW4 to accordingly establish the first parallel-connection mode as the first connection mode.

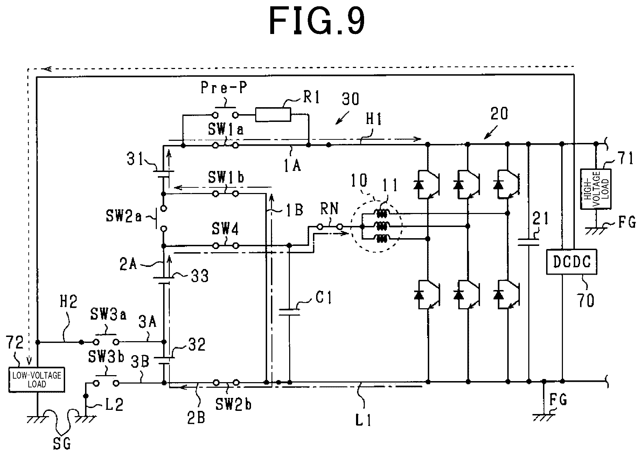

The first parallel-connection mode results in, as illustrated in Fig. 9, the first battery 31 and the first series-connection module 40 being connected in parallel to the high-side power supply line H1.

As illustrated in each of Figs. 8 and 9, the first connection mode results in power being supplied from the first to third batteries 31 to 33 connected to the high-side power supply line H1 to the DC-to-DC converter 70. A voltage of the power supplied to the DC-to-DC converter 70 is stepped down by the DC-to-DC converter 70, so that the stepped-down voltage is supplied to the low-voltage loads 72. As described above, before execution of the switching operation in step S106, power is supplied from the first battery 31 to the low-voltage loads 72 through the DC-to-DC converter 70. The above normal mode-switching routine therefore prevents power to the low-voltage loads 72 from being cut off due to switching of the connection mode of the batteries 31 to 33 from the second connection mode to the first connection mode. After completion of the operation in step S106, the control apparatus 100 terminates the normal mode-switching routine.

Otherwise, upon determination that the vehicle is not stopped, i.e., the vehicle is not in the ignition-off period (NO in step S101), the control apparatus 100 sets the connection mode of the batteries 31 to 33 to the first connection mode, i.e., one of the first series-connection mode and the second parallel-connection mode, in step S111.

Selecting the first series-connection mode in step S111 results in, as illustrated in Fig. 8, the second series-connection module 50 being connected between the high-side power supply line H1 and the high-side ground line L1. Alternatively, selecting the first parallel-connection mode in step S111 results in, as illustrated in Fig. 9, the first battery 31 and the first series-connection module 40 being connected in parallel to the high-side power supply line H1. During the first connection mode, the control apparatus 100 instructs the DC-to-DC converter 70 to step down high-voltage power supplied from the first to third batteries 31 to 33, so that the stepped-down voltage is supplied to the low-voltage loads 72.

Next, the control apparatus 100 determines whether the vehicle has been stopped so that the consumed power of the low-voltage loads 72 has decreased to be lower than or equal to a predetermined second power threshold in step S112. The second power threshold is set to any value, i.e., may be set to be identical to the first power threshold. The second power threshold may be determined based on power that causes a dark current to flow through the low-voltage loads 72. The dark current is needed to activate the low-voltage loads 72 and/or maintain the functions of the low-voltage loads 72. The control apparatus 100, which performs the operation in step S112, serves as a power monitor. In response to determination that the consumed power of the low-voltage loads 72 has not decreased to be lower than or equal to the predetermined second power threshold (NO in step S112), the control apparatus 100 terminates the normal mode-switching routine.

Otherwise, in response to determination that the consumed power of the low-voltage loads 72 has decreased to be lower than or equal to the predetermined second power threshold (YES in step S112), the control apparatus 100 changes the connection mode of the batteries 31 to 33 from the first connection mode to the second connection mode in step S113 (see Fig. 7). This causes (i) high-voltage power to be supplied from the first battery 31 to the DC-to-DC converter 70 through the high-side power supply line H1 and (ii) low-voltage power to be supplied from the second battery 32 to the low-voltage loads 72 through the low-side power supply line H2.

Next, the control apparatus 100 deactivates the DC-to-DC converter 70 in step S114.

Following the operation in step S114, the control apparatus 100 changes the connection mode of the batteries 31 to 33 from the second connection mode to the third connection mode in step S115 as illustrated in Fig. 5. This results in, in the third connection mode, low-voltage power being supplied from the second battery 32 to the low-voltage loads 72 through the low-side power supply line H2. Before execution of the switching operation in step S115, power is supplied from the second battery 32 to the low-voltage loads 72 through the low-side power supply line H2. This results in power supply to the low-voltage loads 72 being continued even if the DC-to-DC converter 70 is deactivated in step S114. This therefore leads to (i) less power consumption as compared with activation of the DC-to-DC converter 70 and (ii) reduction in loss of power due to voltage conversion. Thereafter, the control apparatus 100 terminates the normal mode-switching routine.

As described above, the supply of power from the second battery 32 to the low-voltage loads 72 during the vehicle being stopped may result in the power storage state, such as the state of charge (SOC), of the second battery 32 being likely to be smaller than the SOC of the third battery 33. That is, the supply of power from the second battery 32 to the low-voltage loads 72 during the vehicle being stopped may result in imbalance among the SOCs of the first to third batteries 31 to 33.

From this viewpoint, the control apparatus 100 according to the first embodiment is configured to execute a stop-state equalization routine for equalizing the SOCs of the first through third batteries 31 to 33 while the vehicle is in a stop state.

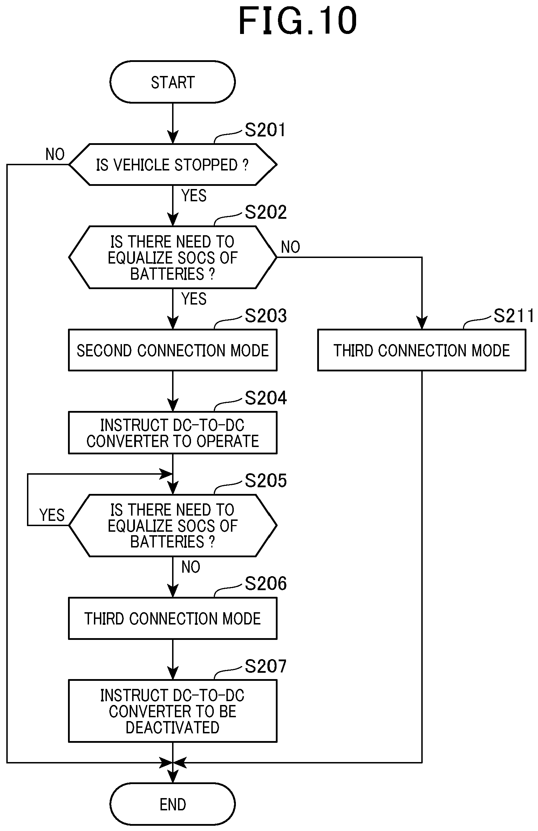

The following describes the stop-state equalization routine with reference to Fig. 10.

The control apparatus 100 is programmed to execute the stop-state equalization routine every predetermined period.

Referring to Fig. 10, when starting the stop-state equalization routine, the control apparatus 100 determines whether the vehicle is stopped, i.e., the vehicle is in the ignition-off period in which the ignition switch of the vehicle is in the off state in step S201.

Upon determination that the vehicle is not stopped, i.e., the vehicle is not in the ignition-off period (NO in step S201), the control apparatus 100 terminates the stop-state equalization routine.

Otherwise, upon determination that the vehicle is stopped (YES in step S201), the control apparatus 100 serves as an estimation unit to estimate the power storage state, i.e., the SOC, of each of the first to third batteries 31 to 33 to accordingly determine whether there is a need to equalize the SOCs of the first to third batteries 31 through 33 in step S202. The control apparatus 100 estimates the SOC of each of the first to third batteries 31 to 33 using one of known estimation methods.

For example, when the SOC of the second battery 32 is determined to be smaller than or equal to a predetermined lower limit, the control apparatus 100 determines that there is a need to equalize the SOCs of the first to third batteries 31 to 33 (YES in step S202). Additionally, when the SOC of the second battery 32 is determined to be smaller than the SOC of the third battery 33 by a predetermined first equalization threshold or more, the control apparatus 100 determines that there is a need to equalize the SOCs of the first to third batteries 31 to 33 (YES in step S202).

Upon determination that there is not a need to equalize the SOCs of the first to third batteries 31 to 33 (NO in step S202), the control apparatus 100 sets the connection mode of the batteries 31 to 33 to the third connection mode in step S211. Specifically, if the connection mode of the batteries 31 to 33 has been the third connection mode before execution of the stop-state equalization routine, the control apparatus 100 continues the third connection mode. Otherwise, if the connection mode of the batteries 31 to 33 has not been the third connection mode, the control apparatus 100 changes the connection mode of the batteries 31 to 33 to the third connection mode.

Otherwise, upon determination that there is a need to equalize the SOCs of the first to third batteries 31 to 33 (YES in step S202), the control apparatus 100 sets the connection mode of the batteries 31 to 33 to the second connection mode in step S203. This enables high-voltage power to be supplied from the first battery 31 to the DC-to-DC converter 70 through the high-side power supply line H1. Additionally, during the second connection mode, low-voltage power is also supplied from the second battery 32 to the low-voltage loads 72 through the low-side power supply line H2.

Next, the control apparatus 100 instructs the DC-to-DC converter 70 to convert, i.e., step down, the input voltage inputted thereto from the first battery 31 through the high-side power supply line H1 in step S204. This results in power with the stepped-down voltage being supplied from the DC-to-DC converter 70 to both the low-voltage loads 72 and the second battery 32 through the power transmission line L3, resulting in the second battery 32 being charged.

Following the operation in step S204, the control apparatus 100 estimate the power storage state, i.e., the SOC, of each of the first to third batteries 31 to 33 to accordingly determine whether there is a need to equalize the SOCs of the first to third batteries 31 to 33 in step S205, which is identical to the determination in step S202. The criteria for the determination in step S205 is identical to that for determination in step S202, but the criteria for the determination in step S205 may be different from that for determination in step S202.

For example, the control apparatus 100 may be programmed to determine whether the SOC of the second battery 32 is within a predetermined allowable range and the absolute difference in SOC between the second and third batteries 32 and 33 is within a predetermined allowable difference range. Then, the control apparatus 100 may be programmed to determine that there is not a need to equalize the SOCs of the first to third batteries 31 to 33 upon determination that the SOC of the second battery 32 is within the predetermined allowable range and the absolute difference in SOC between the second and third batteries 32 and 33 is within the predetermined allowable difference range. Otherwise, the control apparatus 100 may be programmed to determine that there is a need to equalize the SOCs of the first to third batteries 31 to 33 upon determination that the SOC of the second battery 32 is not within the predetermined allowable range or the absolute difference in SOC between the second and third batteries 32 and 33 is not within the predetermined allowable difference range.

In response to determination that there is a need to equalize the SOCs of the first to third batteries 31 to 33 (YES in step S205), the control apparatus 100 iterates the determination in step S205 after lapse of a predetermined time as long as the determination in step S205 is NO.

That is, in response to determination that there is not a need to equalize the SOCs of the first to third batteries 31 to 33 (NO in step S205), the control apparatus 100 sets the connection mode of the batteries 31 to 33 to the third connection mode in step S206.

Specifically, in step S206, the control apparatus 100 turns off or maintains in the off state each of the first-A switch SW1a and the first-B switch SW1b, thus cutting off power supply from the first battery 31 to the second battery 32 and supplying low-voltage power from the second battery 32 to the low-voltage loads 72 (see Fig. 5). Following the operation in step S206, the control apparatus 100 deactivates the DC-to-DC converter 70 in step S207, and thereafter terminates the stop-state equalization routine.

The first embodiment described above achieves the following advantageous benefits.

The power supply system 30 according to the first embodiment is configured to switchably select between (i) the first connection mode in which all the first to third batteries 31 to 33 are connected between the high-side power supply line H1 and the high-side ground line L1 and (ii) the second connection mode. In the second connection mode, power supply between the high-side ground line L1 and the low-side ground line L2 is cut off, the second battery 32 is connected between the low-side power supply line H2 and the low-side ground line L2, and the first battery 31 included in the remaining first and third batteries 31 and 33 is connected between the high-side power supply line H1 and the high-side ground line L1. This therefore makes it possible to flexibly select at least one of the power sources 31 to 33 to be used.

The power supply system 30 according to the first embodiment, which establishes the second connection mode, enables low-voltage power to be supplied to the low-voltage loads 72. This eliminates the need of providing low power supplies, resulting in reduction in both the number of components of the power supply system 30 and the number of processes required to constitute the power supply system 30.

Successive execution of the third connection mode enables equalization of the SOCs of the first to third batteries 31 to 33 even if there is an imbalance among the SOCs of the first to third batteries 31 to 33. During the successive execution of the third connection mode, the connection mode of the batteries 31 to 33 is switched to the second connection mode, so that the input voltage from the first battery 31 is stepped down, resulting in the third battery 33 being charged based on the stepped-down voltage. This eliminates the need of providing additional battery chargers, resulting in the configuration of the power supply system 30 being more simplified.

When switching the connection mode of the batteries 31 to 33 from the third connection mode to the first connection mode, the control apparatus 30 is configured to temporarily switch the control mode of the power supply system 30 to the second connection mode to accordingly (i) instruct the DC-to-DC converter 70 to operate and (ii) supply low-voltage power from the second battery 32 to the low-voltage loads 72. Thereafter, the control apparatus 30 is configured to switch the connection mode of the batteries 31 to 33 to the first connection mode. This therefore prevents power supply to the low-voltage loads 72 from being cut off during switching of the connection mode of the batteries 31 to 33 from the third connection mode to the first connection mode.

Similarly, when switching the connection mode of the batteries 31 to 33 from the first connection mode to the third connection mode, the control apparatus 30 is configured to temporarily switch the control mode of the power supply system 30 to the second connection mode to accordingly supply low-voltage power from the second battery 32 to the low-voltage loads 72 and thereafter switch the connection mode of the batteries 31 to 33 to the third connection mode. Thereafter, the control apparatus 30 is configured to switch the connection mode of the batteries 31 to 33 to the first connection mode. This therefore prevents power supply to the low-voltage loads 72 from being cut off during switching of the connection mode of the batteries 31 to 33 from the first connection mode to the third connection mode.

The power supply system 30 is configured to select the first parallel-connection mode when being connected to a low-voltage charger, and the first series-connection mode when being connected to a high-voltage charger.

The power supply system 30 is configured to establish the third connection mode in which only the second battery 32 is connected between the low-side power supply line H2 and the low-side ground line L2. This configuration eliminates the need of stepping down, using the DC-to-DC converter 70, high-voltage power, such as high-voltage power supplied from the first battery 31 and supplying the stepped-down voltage to the low-voltage loads 72 while the vehicle is in the stop state. This configuration therefore reduces consumed power required to operate the DC-to-DC converter 70 and loss of voltage stepping-down process.

### Second embodiment

The following describes a power supply system 230 according to the second embodiment. A part of the power supply system 30 has been changed to constitute the power supply system 230.

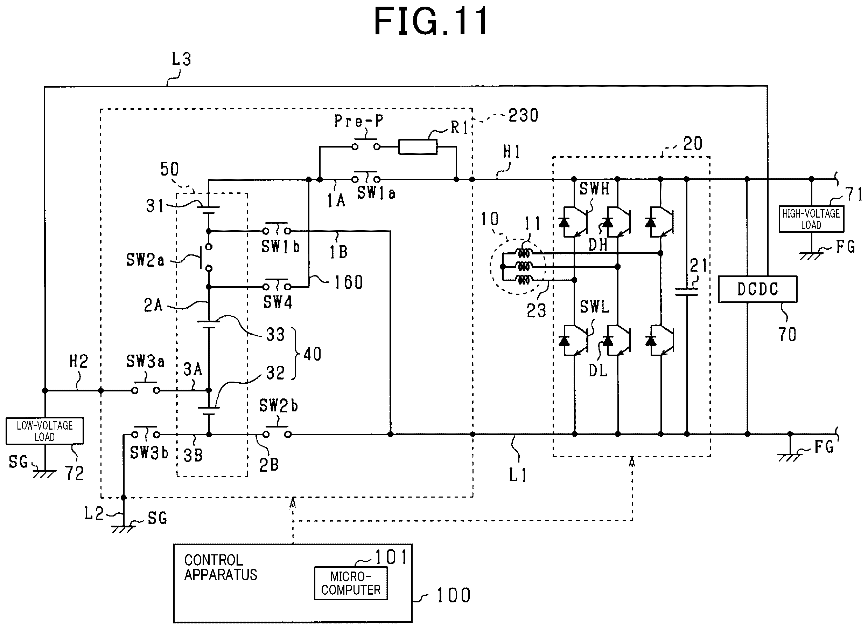

A bypass path of the power supply system 230 according to the second embodiment, to which reference character 160 is added, has both first and second ends. As illustrated in Fig. 11, the first end of the bypass path 160 is connected to a portion of the first-A electrical path 1A; the portion is located between the first-A switch SW1a and the positive terminal of the first battery 31. The second end of the bypass path 160 is connected to the positive terminal of the first series-connection module 40. The first end of the bypass path 160 may be connected to the high-side power supply line H1, and the second end of the bypass path 160 may be connected to the positive terminal of the first series-connection module 40.

The power supply system 230 includes a fourth switch SW4 mounted on the bypass path 160.

The terminal voltage across the third battery 33 is set to 388 V, which is different from that according to the first embodiment. That is, the terminal voltage across each of the second battery 32 and the third battery 33 is set such that the terminal voltage across the first series-connection module 40, which is comprised of the second and third batteries 32 and 33 connected in series to each other, is substantially identical to the terminal voltage across the first battery 31.

The following describes how the control apparatus 100 of the second embodiment performs on-off controls of each switch SW of the power supply system 230.

The control apparatus 100 of the second embodiment is configured to set the connection mode of the batteries 31 to 33 to the first connection mode in which a part or all of the first to third batteries 31 to 33 included in the power supply system 230 is connected to the high-side power supply line H1. That is, the control apparatus 100 according to the second embodiment is configured to connect all the first to third batteries 31 to 33 included in the power supply system 230 to the high-side power supply line H1 to accordingly establish the first connection mode. In particular, the control apparatus 100 according to the second embodiment is configured to select, as the first connection mode, one of the first series-connection mode and the first parallel-connection mode, and establish the selected one of the first series-connection mode and the first parallel-connection mode.

The first series-connection mode represents a mode in which the first battery 31, the third battery 33, and the second battery 32 are connected in series to one another to constitute the second series-connection module 50, and the second series-connection module 50 is connected to the high-side power supply line H1.

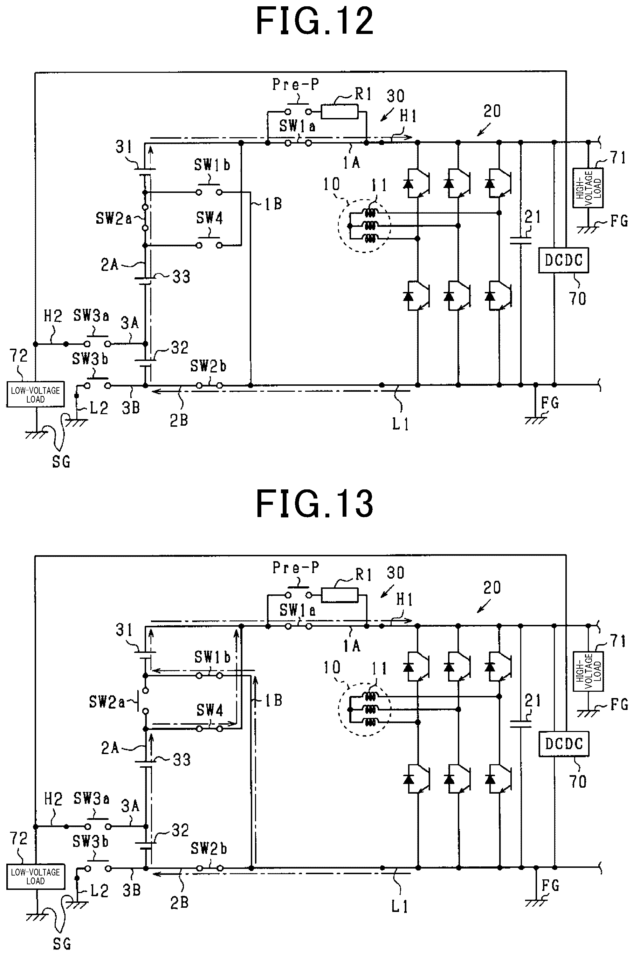

Specifically, the control apparatus 100 is configured to, as illustrated in Fig. 12, turn off or maintain in the off state each of the first-B switch SW1b, the third-A switch SW3a, the third-B switch SW3b, and the fourth switch SW4 and turn on or maintain in the on state the first-A switch SW1a, the second-A switch SW2a, and the second-B switch SW2b to accordingly establish the first series-connection mode as the first connection mode.

The first series-connection mode results in the second series-connection module 50 being connected between the high-side power supply line H1 and the high-side ground line L1; the second series-connection module 50 is comprised of the first, third, and second batteries 31, 33, and 32 being connected in series to each other. That is, high-voltage power having the sum of 400 V, 388 V, and 12 V is supplied from the second series-connection module 50 to the high-voltage loads 71 through the high-side power supply line H1. In contrast, no power is supplied from the second battery 32 to the low-voltage loads 72 through the low-side power supply line H2. Like Fig. 8, it is possible to step down the voltage across the second series-connection module 50 through the DC-to-DC converter 70, and supply the stepped-down voltage to the low-voltage loads 72.

The first parallel-connection mode represents a mode in which the first battery 31 and the first series-connection module 40 are connected in parallel to the high-side power supply line H1.

Specifically, the control apparatus 100 is configured to, as illustrated in Fig. 13, turn off or maintain in the off state each of the second-A switch SW2a, the third-A switch SW3a, and the third-B switch SW3b, and turn on or maintain in the on state the first-A switch SW1a, the first-B switch SW1b, the second-B switch SW2b, and the fourth switch SW4 to accordingly establish the first parallel-connection mode as the first connection mode.

The first parallel-connection mode results in the first battery 31 and the second series-connection module 50 being connected in parallel to between the high-side power supply line H1 and the high-side ground line L1. No power is supplied from the second battery 32 to the low-voltage loads 72 through the low-side power supply line H2. Like Fig. 9, it is possible to step down the voltage across the second series-connection module 50 through the DC-to-DC converter 70, and supply the stepped-down voltage to the low-voltage loads 72.

Additionally, the control apparatus 100 is configured to set the connection mode of the batteries 31 to 33 to the second connection mode in which a part of the first to third batteries 31 to 33, such as the second battery 32, included in the power supply system 230 is connected to the low-side power supply line H2 and a part or all of the remaining batteries, such as the first battery 31, is connected to the high-side power supply line H1.

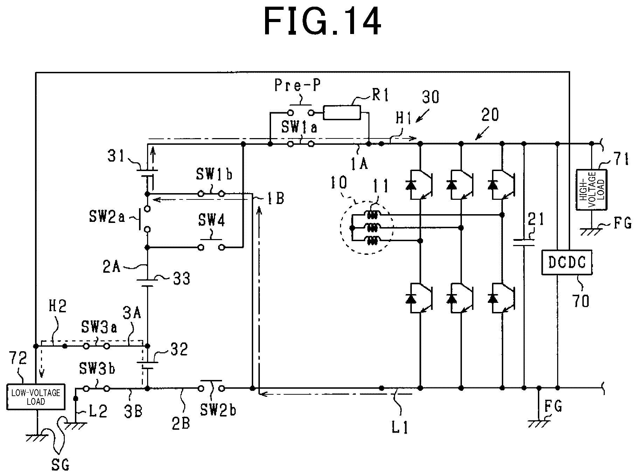

Specifically, the control apparatus 100 is configured to, as illustrated in Fig. 14, turn off or maintain in the off state each of the second-A switch SW2a, the second-B switch SW2b, and the fourth switch SW4, and turn on or maintain in the on state the first-A switch SW1a, the first-B switch SW1b, the third-A switch SW3a, and the third-B switch SW3b to accordingly establish the second connection mode.

The second connection mode results in the first battery 31 being connected between the high-side power supply line H1 and the high-side ground line L1, and the second battery 32 being connected between the low-side power supply line H2 and the low-side ground line L2. This results in high-voltage power being supplied from the first battery 31 to the high-voltage loads 71 through the high-side power supply line H1, and low-voltage power being supplied from the second battery 32 to the low-voltage loads 72 through the low-side power supply line H2. In the second connection mode, the high-side ground line L1 and the low-voltage ground line L2 are electrically isolated from one another. Like Fig. 7, it is possible to step down the voltage across the first battery 31 through the DC-to-DC converter 70, and supply the stepped-down voltage to the low-voltage loads 72 and/or charge the second battery 32.

The control apparatus 100 is configured to set the connection mode of the batteries 31 to 33 to the third connection mode in which a part of the first to third batteries 31 to 33, such as the second battery 32, included in the power supply system 30 is only connected to the low-side power supply line H2.

Specifically, the control apparatus 100 is configured to turn off or maintain in the off state each of the first-A switch SW1a, the first-B switch SW1b, the second-A switch SW2a, the second-B switch SW2b, and the fourth switch SW4, and turn on or maintain in the on state the third-A switch SW3a and the third-B switch SW3b to accordingly establish the third connection mode. This results in, in the third connection mode, low-voltage power being supplied from the second battery 32 to the low-voltage loads 72 through the low-side power supply line H2. No power is supplied from the first battery 31 to the high-voltage loads 71 through the high-side power supply line H1.

The normal mode-switching routine and the stop-state equalization routine according to the second embodiment are substantially identical to the respective normal mode-switching routine and stop-state equalization routine according to the first embodiment, and therefore descriptions of the normal mode-switching routine and the stop-state equalization routine according to the second embodiment are omitted.

Accordingly, the power supply system 230 of the second embodiment achieves the same advantageous benefits as those achieved by the power supply system 30 of the first embodiment.

### Third embodiment

The following describes a power supply system 330 according to the third embodiment. A part of the power supply system 30 has been changed to constitute the power supply system 330.

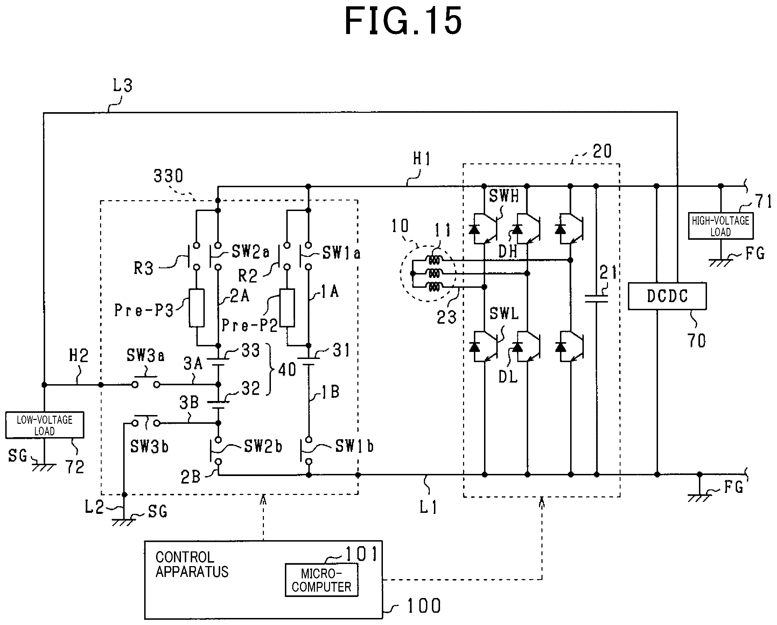

The power supply system 330 of the third embodiment is configured such that, as illustrated in Fig. 15, the first battery 31 and the first series-connection module 40 comprised of the second and third batteries 32 and 33 are connected in parallel to the high-side power supply line H1.

The following describes in detail the power supply system 330 with reference to Fig. 15.

The terminal voltage across the third battery 33 according to the third embodiment is set to 388 V, which is different from that according to the first embodiment. That is, the terminal voltage across each of the second battery 32 and the third battery 33 is set such that the terminal voltage across the first series-connection module 40, which is comprised of the second and third batteries 32 and 33 connected in series to each other, is substantially identical to the terminal voltage across the first battery 31.

The power supply system 330 includes the first-A switch SW1a mounted on the first-A electrical path 1A that connects between the positive terminal of the first battery 31 and the high-side power supply line H1. The power supply system 330 also includes the first-B switch SW1b mounted on the first-B electrical path 1B that connects between the negative terminal of the first battery 31 and the high-side ground line L1. A series module comprised of a pre-charge switch Pre-P2 and a resistor R2 connected in series to each other is connected in parallel to the first-A switch SW1a.

The power supply system 330 includes the second-A switch SW2a mounted on the second-A electrical path 2A connecting between the positive terminal of the first series-connection module 40 and the high-level power supply line H1. The power supply system 330 includes the second-B switch SW2b mounted on the second-B electrical path 2B that connects between the negative terminal of the first series-connection module 40 and the high-side ground line L1.

In the third embodiment, the third battery 33 and the second battery 32 are connected to one another in this order from the high-voltage power supply line H1 to the high-side ground line L1. The positive terminal of the first series-connection module 40 according to the first embodiment corresponds to the positive terminal of the third battery 33, and the negative terminal of the first series-connection module 40 corresponds to the negative terminal of the second battery 32. A series-connection module, which is comprised of a pre-charge switch Pre-P3 and a resistor R3 connected in series to one another, is connected in parallel to the second-A switch SW2a.

The power supply system 330 includes the third-A switch SW3a mounted on the third-A electrical path 3A that connects between the positive terminal of the second battery 32 and the low-side power supply line H2. The power supply system 330 also includes the third-B switch SW3b mounted on the third-B electrical path 3B that connects between the negative terminal of the second battery 32 and the low-side ground line L2.

The following describes how the control apparatus 100 of the third embodiment performs on-off controls of each switch SW of the power supply system 330.

The control apparatus 100 of the third embodiment is configured to set the connection mode of the batteries 31 to 33 to the first connection mode in which a part or all of the first to third batteries 31 to 33 included in the power supply system 330 is connected to the high-side power supply line H1.

The first connection mode according to the third embodiment represents a mode in which the first battery 31 and the first series-connection module 40 are connected in parallel to the high-side power supply line H1.

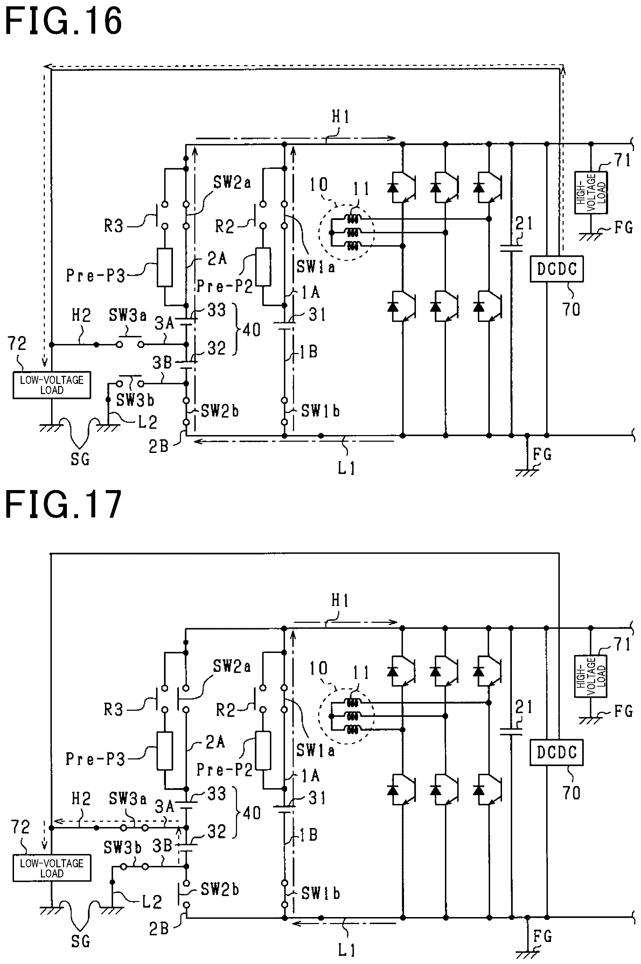

Specifically, the control apparatus 100 is configured to, as illustrated in Fig. 16, turn off or maintain in the off state each of the third-A switch SW3a and the third-B switch SW3b, and turn on or maintain in the on state the first-A switch SW1a, the first-B switch SW1b, the second-A switch SW2a, and the second-B switch SW2b to accordingly establish the first connection mode. As illustrated by the dashed line in Fig. 16, the DC-to-DC converter 70 is capable of stepping down high-voltage power, and supply the stepped-down voltage to the low-voltage loads 72.

Additionally, the control apparatus 100 is configured to set the connection mode of the batteries 31 to 33 to the second connection mode in which a part of the first to third batteries 31 to 33, such as the second battery 32, included in the power supply system 330 is connected to the low-side power supply line H2 and a part or all of the remaining batteries, such as the first battery 31, is connected to the high-side power supply line H1.

Specifically, the control apparatus 100 is configured to, as illustrated in Fig. 17, turn off or maintain in the off state each of the second-A switch SW2a and the second-B switch SW2b, and turn on or maintain in the on state the first-A switch SW1a, the first-B switch SW1b, the third-A switch SW3a, and the third-B switch SW3b to accordingly establish the second connection mode.

The second connection mode results in the first battery 31 being connected between the high-side power supply line H1 and the high-side ground line L1, and the second battery 32 being connected between the low-side power supply line H2 and the low-side ground line L2 while the high-side ground line L1 and the low-voltage ground line L2 are electrically isolated from one another. This results in high-voltage power being supplied from the first battery 31 to the high-voltage loads 71 through the high-side power supply line H1, and low-voltage power being supplied from the second battery 32 to the low-voltage loads 72 through the low-side power supply line H2. Like the first connection mode, in the second connection mode, it is possible to step down the voltage across the first battery 31 through the DC-to-DC converter 70, and supply the stepped-down voltage to the low-voltage loads 72 and/or charge the second battery 32.

The control apparatus 100 is configured to set the connection mode of the batteries 31 to 33 to the third connection mode in which a part of the first to third batteries 31 to 33, such as the second battery 32, included in the power supply system 30 is only connected to the low-side power supply line H2.

Specifically, the control apparatus 100 is configured to turn off or maintain in the off state each of the first-A switch SW1a, the first-B switch SW1b, the second-A switch SW2a, and the second-B switch SW2b, and turn on or maintain in the on state the third-A switch SW3a and the third-B switch SW3b to accordingly establish the third connection mode. This results in, in the third connection mode, low-voltage power being supplied from the second battery 32 to the low-voltage loads 72 through the low-side power supply line H2. No power is supplied from the first battery 31 to the high-voltage loads 71 through the high-side power supply line H1.

The normal mode-switching routine and the stop-state equalization routine according to the third embodiment are substantially identical to the respective normal mode-switching routine and stop-state equalization routine according to the first embodiment, and therefore descriptions of the normal mode-switching routine and the stop-state equalization routine according to the third embodiment are omitted.

Accordingly, the power supply system 330 of the third embodiment achieves the same advantageous benefits as those achieved by the power supply system 30 of the first embodiment.

### Fourth embodiment

The following describes a power supply system 430 according to the fourth embodiment. A part of the power supply system 30 has been changed to constitute the power supply system 430.

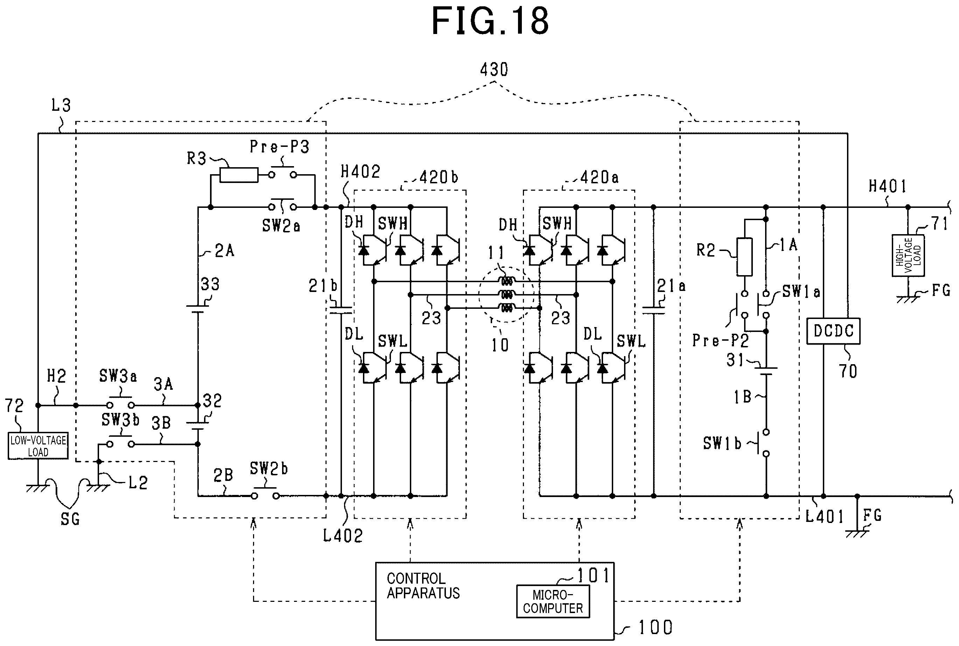

The power supply system 430 of the fourth embodiment includes, as illustrated in Fig. 18, a first inverter 420a and a second inverter 420b.

The following describes in detail the power supply system 430 with reference to Fig. 18.

The first inverter 420a includes, like the inverter 20 of the first embodiment, three-phase series-connected switch units; the series-connected switch unit for each phase is comprised of an upper-arm switch SWH and a lower-arm switch SWL connected in series to each other. The first inverter 420a includes, like the inverter 20 of the first embodiment, a smoothing capacitor 21a. The smoothing capacitor 21a may be arranged outside the first inverter 420a.

The first inverter 420a is connected to a first high-side power supply line H401 and to a first high-level ground line L401. That is, the series-connected switch unit, which is comprised of the upper- and lower-arm switches SWH and SWL, of each phase of the first inverter 420a is connected between the first high-side power supply line H401 and the first high-level ground line L401.

The emitter, which serves as the low-side terminal, of the upper-arm switch SWH of the first inverter 420a for each phase is connected to the collector, which serves as the high-side terminal, of the lower-arm switch SWL of the first inverter 420a for the corresponding phase. The connection point between the emitter of the upper-arm switch SWH and the collector of the lower-arm switch SWL of the first inverter 420a for each phase is connected to the first end of the corresponding phase armature winding 11 through the conductor, such as the busbar, 23.

The second inverter 420b includes, like the inverter 20 of the first embodiment, three-phase series-connected switch units; the series-connected switch unit for each phase is comprised of an upper-arm switch SWH and a lower-arm switch SWL connected in series to each other. The second inverter 420b includes, like the inverter 20 of the first embodiment, a smoothing capacitor 21b. The smoothing capacitor 21b may be arranged outside the second inverter 420b.

The second inverter 420b is connected to a second high-side power supply line H402 and to a second high-level ground line L402. That is, the series-connected switch unit, which is comprised of the upper- and lower-arm switches SWH and SWL, of each phase of the second inverter 420b is connected between the second high-side power supply line H402 and the second high-level ground line L402.

The emitter, which serves as the low-side terminal, of the upper-arm switch SWH of the second inverter 420b for each phase is connected to the collector, which serves as the high-side terminal, of the lower-arm switch SWL of the second inverter 420b for the corresponding phase. The connection point between the emitter of the upper-arm switch SWH and the collector of the lower-arm switch SWL of the second inverter 420b for each phase is connected to the first end of the corresponding phase armature winding 11 through the conductor, such as the busbar, 23.

Each of the second high-side power supply line H402 and the second high-side ground line L402 is connected through the armature windings 11 of the motor 10 to the corresponding one of the first high-side power supply line H401 and the first high-side ground line L401.

The terminal voltage across the third battery 33 according to the fourth embodiment is set to 388 V, which is different from that according to the first embodiment. That is, the terminal voltage across each of the second battery 32 and the third battery 33 is set such that the terminal voltage across the first series-connection module 40, which is comprised of the second and third batteries 32 and 33 connected in series to each other, is substantially identical to the terminal voltage across the first battery 31. The terminal voltage across the first battery 31 according to the fourth embodiment may be identical to or may not be identical to the terminal voltage across the first battery 31.

The power supply system 430 includes the first-A switch SW1a mounted on the first-A electrical path 1A that connects between the positive terminal of the first battery 31 and the first high-side power supply line H401. The power supply system 430 also includes the first-B switch SW1b mounted on the first-B electrical path 1B that connects between the negative terminal of the first battery 31 and the first high-side ground line L401. The first inverter 420a enables power to be transferred to and from the first battery 31 through the first high-side power supply line H401 and the first ground line L401. The series module comprised of the pre-charge switch Pre-P2 and the resistor R2 connected in series to each other is connected in parallel to the first-A switch SW1a.

The power supply system 430 includes the second-A switch SW2a mounted on the second-A electrical path 2A connecting between the positive terminal of the first series-connection module 40 and the second high-level power supply line H402. The power supply system 430 includes the second-B switch SW2b mounted on the second-B electrical path 2B that connects between the negative terminal of the first series-connection module 40 and the second high-side ground line L402. The series module comprised of the pre-charge switch Pre-P3 and the resistor R3 connected in series to each other is connected in parallel to the second-A switch SW2a.

The power supply system 430 includes the third-A switch SW3a mounted on the third-A electrical path 3A that connects between the positive terminal of the second battery 32 and the low-side power supply line H2. The power supply system 430 also includes the third-B switch SW3b mounted on the third-B electrical path 3B that connects between the negative terminal of the second battery 32 and the low-side ground line L2.

The following describes how the control apparatus 100 of the fourth embodiment performs on-off controls of each switch SW of the power supply system 430.

The control apparatus 100 of the fourth embodiment is configured to set the connection mode of the batteries 31 to 33 to the first connection mode in which a part or all of the first to third batteries 31 to 33 included in the power supply system 430 is connected to the high-side power supply line H1 comprised of the first and second high-side power supply lines H401 and H402.

The first connection mode according to the fourth embodiment represents a mode in which the first battery 31 is connected to the first high-side power supply line H401, and the first series-connection module 40 is connected to the second high-side power supply line H402.

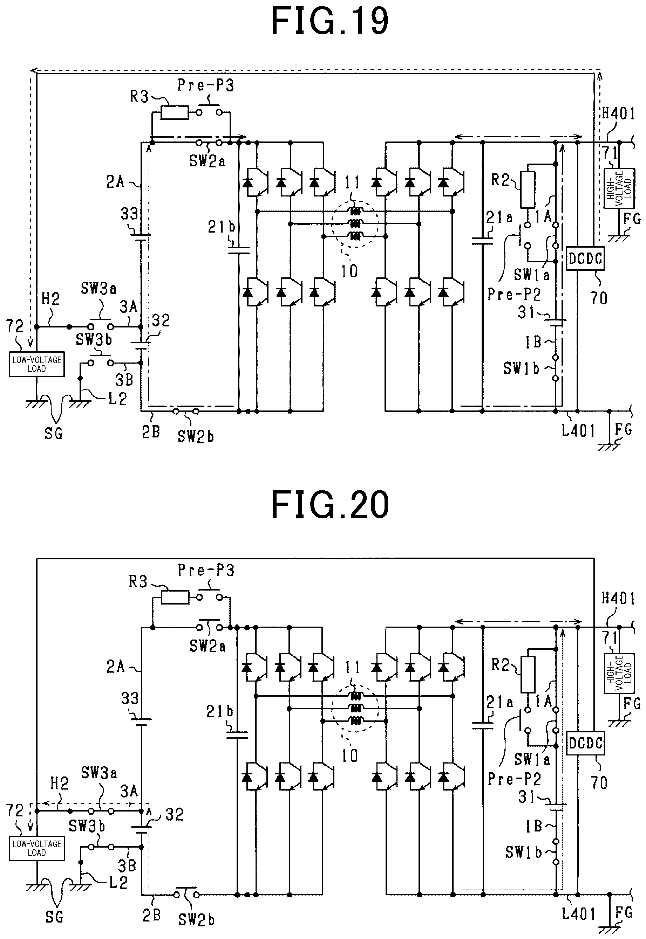

Specifically, the control apparatus 100 is configured to, as illustrated in Fig. 19, turn off or maintain in the off state each of the third-A switch SW3a and the third-B switch SW3b, and turn on or maintain in the on state the first-A switch SW1a, the first-B switch SW1b, the second-A switch SW2a, and the second-B switch SW2b to accordingly establish the first connection mode. The first connection mode results in the first battery 31 being connected between the first high-side power supply line H401 and the first high-side ground line H402 and the first series-connection module 40 being connected between the second high-side power supply line H402 and the second high-side ground line L402. As illustrated by the dashed line in Fig. 19, the DC-to-DC converter 70 is capable of stepping down high-voltage power, and supply the stepped-down voltage to the low-voltage loads 72.

Additionally, the control apparatus 100 is configured to set the connection mode of the batteries 31 to 33 to the second connection mode in which a part of the first to third batteries 31 to 33, such as the second battery 32, included in the power supply system 430 is connected to the low-side power supply line H2 and a part or all of the remaining batteries, such as the first battery 31, is connected to the first high-side power supply line H401.

Specifically, the control apparatus 100 is configured to, as illustrated in Fig. 20, turn off or maintain in the off state each of the second-A switch SW2a and the second-B switch SW2b, and turn on or maintain in the on state the first-A switch SW1a, the first-B switch SW1b, the third-A switch SW3a, and the third-B switch SW3b to accordingly establish the second connection mode.

The second connection mode results in the first battery 31 being connected between the first high-side power supply line H401 and the first high-side ground line L401, and the second battery 32 being connected between the low-side power supply line H2 and the low-side ground line L2. In the second connection mode, it is possible to step down the voltage across the first battery 31 through the DC-to-DC converter 70, and supply the stepped-down voltage to the low-voltage loads 72.

The control apparatus 100 is configured to set the connection mode of the batteries 31 to 33 to the third connection mode in which a part of the first to third batteries 31 to 33, such as the second battery 32, included in the power supply system 30 is only connected to the low-side power supply line H2.

Specifically, the control apparatus 100 is configured to turn off or maintain in the off state each of the first-A switch SW1a, the first-B switch SW1b, the second-A switch SW2a, and the second-B switch SW2b, and turn on or maintain in the on state the third-A switch SW3a and the third-B switch SW3b to accordingly establish the third connection mode. This results in, in the third connection mode, power supply between the first high-side power supply line H401 and the first battery 31 being cut off, and the second battery 32 being connected between the low-side power supply line H2 and the low-side ground line L2. This also results in power supply from the third battery 33 to the second high-side power supply line H402 being cut off.

The normal mode-switching routine and the stop-state equalization routine according to the fourth embodiment are substantially identical to the respective normal mode-switching routine and stop-state equalization routine according to the first embodiment, and therefore descriptions of the normal mode-switching routine and the stop-state equalization routine according to the third embodiment are omitted.

Accordingly, the power supply system 430 of the fourth embodiment achieves the same advantageous benefits as those achieved by the power supply system 30 of the first embodiment.

### Modifications

The following describes modifications, each of which includes a modified configuration of at least part of the embodiments.

### First modification

Each of the power supply systems 30, 230, 330, and 430 of the corresponding one of the embodiments may include a low-voltage power supply unit 80 that supplies low-voltage power, such as power with 12 V, to the low-voltage loads 72 through the low-side power supply line H2.

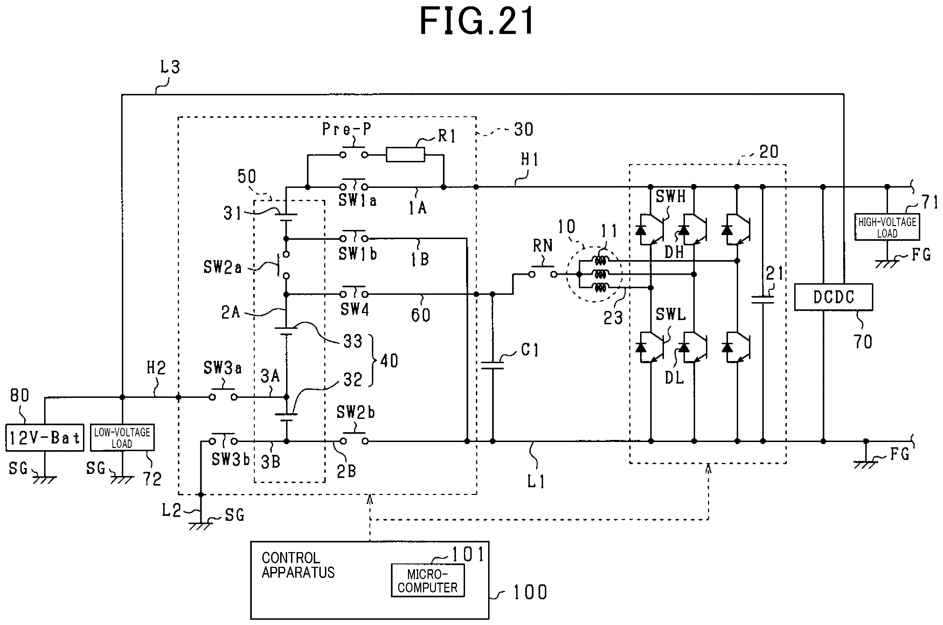

For example, as illustrated in Fig. 21, such a low-voltage power supply unit 80 may be provided in the power supply system 30 of the first embodiment. The low-voltage power supply unit 80 is comprised of, for example, switches and a lead-acid storage battery. The control apparatus may be configured to control power supply from the low-voltage power supply unit 80. Both of or any one of the DC-to-DC converter 70 and the low-voltage power supply unit 80 may be provided in the power supply system 30 or outside the power supply system 30.

The configuration of the power supply system 30 including the low-voltage power supply unit 80 makes it possible to eliminate the need of supplying low-voltage power from the third battery 33 to the low-voltage loads 72 during normal stop periods. For example, in a case where there is an anomaly in the low-voltage power supply unit 80, at least one of the first to third batteries 31 to 33, such as the second battery 32, can serve as a low-voltage power supply in such an anomaly situation. That is, each of the power supply systems 30, 230, 330, and 430 can be configured to include redundancy.

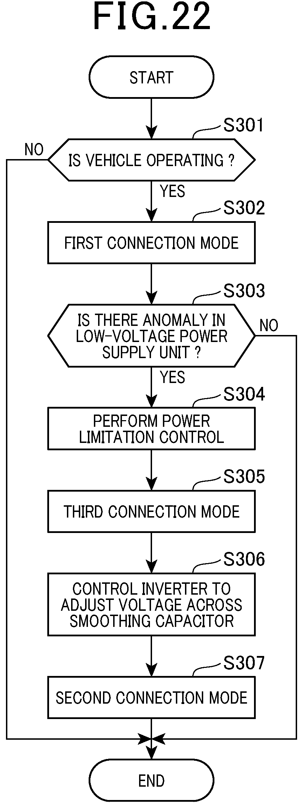

The following describes an anomaly mode-switching routine carried out by the control apparatus 100 for switchably selecting one of the first to third connection modes as the connection mode of, for example, power supply system 30 in an anomaly situation according to the first modification in accordance with Fig. 22. In the first modification, let us assume that the connection mode of the batteries 31 to 33 is set to the first connection mode during startup of the vehicle, so that power is supplied from at least one of the first to third batteries 31 to 33 to the high-voltage loads 71, such as the motor 10, and power is supplied from the low-voltage power supply unit 80 or the DC-to-DC converter 70 to the low-voltage loads 72.

The control apparatus 100 is programmed to execute the anomaly mode-switching routine every predetermined period.

When starting the anomaly mode-switching routine, the control apparatus 100 determines whether the vehicle is operating, i.e., the ignition switch of the vehicle is in the on state in step S301. Upon determination that the vehicle is not operating (NO in step S301), the control apparatus 100 terminates the anomaly mode-switching routine.

Otherwise, upon determination that the vehicle is operating (YES in step S301), the control apparatus 100 sets the connection mode of the batteries 31 to 33 to the first connection mode in step S302. Specifically, if the connection mode of the batteries 31 to 33 has been the first connection mode before execution of the anomaly mode-switching routine, the control apparatus 100 continues the first connection mode. Otherwise, if the connection mode of the batteries 31 to 33 has not been the first connection mode, the control apparatus 100 changes the connection mode of the batteries 31 to 33 to the first connection mode. The first connection mode results in high-voltage power being supplied from the second series-connection module 50 to the high-voltage loads 71 through the high-side power supply line H1 while no power is supplied from the second battery 32 to the low-voltage loads 72 through the low-side power supply line H2. That is, the first connection mode results in low-voltage power being supplied from the low-voltage power source 80 to the low-voltage loads 72.

Following the operation in step S302, the control apparatus 100 serves as an anomaly determiner to determine whether there is an anomaly in power supply from the low-voltage power supply unit 80 to the low-voltage loads 72 in step S303. Specifically, the control apparatus 100 measures, for example, the amount of current outputted from the low-voltage power supply unit 80, the voltage outputted from the low-voltage power supply unit 80 and/or the temperature of the low-voltage power supply unit 80 based on the measurements of the above various sensors, and determines whether there is an anomaly in power supply from the low-voltage power supply unit 80 to the low-voltage loads 72 in accordance with the measured amount of current, voltage, and/or temperature of the low-voltage power supply unit 80.

Upon determination that there is no anomaly in power supply from the low-voltage power supply unit 80 to the low-voltage loads 72 (NO in step S303), the control apparatus 100 terminates the anomaly mode-switching routine.

Otherwise, upon determination that there is an anomaly in power supply from the low-voltage power supply unit 80 to the low-voltage loads 72 (YES in step S303), the control apparatus 100 serves as a load controller to control the high-voltage loads 71 to limit consumed power of the high-voltage loads 71 in step S304. For example, the control apparatus 100 controls the inverter 20 to lower output torque of the motor 10.

Next, the control apparatus 100 changes the connection mode of the batteries 31 to 33 to the third connection mode in step S305. This results in, in the third connection mode, low-voltage power being supplied from the second battery 32 to the low-voltage loads 72 through the low-side power supply line H2. While no power is supplied from the first battery 31 to the high-voltage loads 71 through the high-side power supply line H1, power is supplied from the smoothing capacitor 21 to the high-voltage loads 71 for a while.

Following the operation in step S305, the control apparatus 100 serves as the inverter controller to control the inverter 20 to accordingly adjust a voltage across the smoothing capacitor 21 in step S306. Specifically, the control apparatus 100 adjusts the voltage across the smoothing capacitor 21 to cause the voltage across the smoothing capacitor 21 to be equal to the voltage across the first battery 31. The voltage adjustment in step S306 makes it possible to prevent, if the connection mode of the batteries 31 to 33 is changed to the second connection mode, the voltage across the smoothing capacitor 21 from becoming higher than the voltage across the first battery 31.

After the voltage adjustment in step S306, the control apparatus 100 changes the connection mode of the batteries 31 to 33 to the second connection mode in step S307. This results in, in the second connection mode, high-voltage power being supplied from the first battery 31 to the high-voltage loads 71 through the high-side power supply line H1 and low-voltage power being supplied from the second battery 32 to the low-voltage loads 72 through the low-side power supply line H2. This therefore enables the vehicle to travel in a limp-home mode for a while. After completion of the operation in step S307, the control apparatus 100 terminates the anomaly mode-switching routine.

Next, the following describes a mode-switching routine carried out by the control apparatus 100 in response to determination that there is an anomaly in the low-voltage power supply unit 80 while the vehicle is stopped. While the vehicle is stopped, no power is supplied from each of the first to third batteries 31 to 33 to the low-voltage loads 72, but power is supplied from the low-voltage power supply unit 80 to the low-voltage loads 72. For this reason, if it is determined that there is an anomaly in the low-voltage power supply unit 80, the control apparatus 100 is configured to set the control mode of the power supply system 30 to the third control mode, resulting in low-voltage power being supplied from the second battery 32 to the low-voltage loads 72 through the low-side power supply line H2. While the vehicle is stopped, the vehicle does not have to travel in the limp-home mode. For this reason, the control apparatus 100 may be configured not to set the control mode of the power supply system 30 to the third control mode.

### Second modification

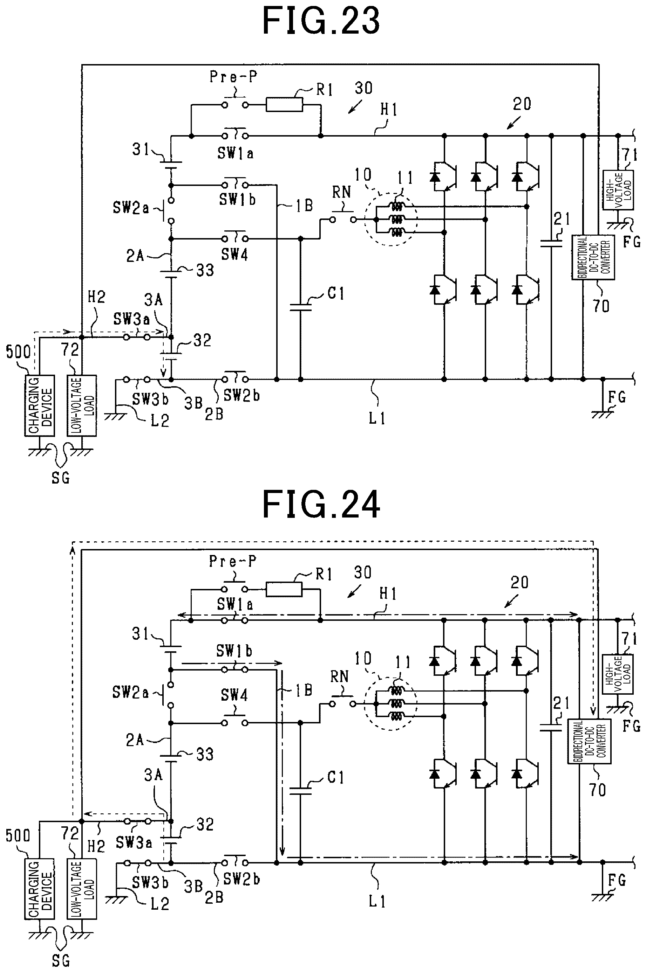

Each of the power supply systems 30, 230, 330, and 430 of the corresponding one of the embodiments may be connected to a charging device for charging the second battery 32 while the vehicle is stopped. For example, as illustrated in Fig. 23, the power supply system 30 may be connected to a charging device 500. An external charging station or a solar power generator may be used as the charging device 500. The charging device 500 may be connected to the second battery 32 through the low-side power supply line H2 and the third-A electrical path 3A, making it possible for the charging device 500 to charge the second battery 32 while the connection mode of the batteries 31 to 33 is set to the third connection mode.

As illustrated in Fig. 23, charging only the second battery 32 may result in imbalance between the SOC of the second battery 32 and the SOC of the third battery 33.

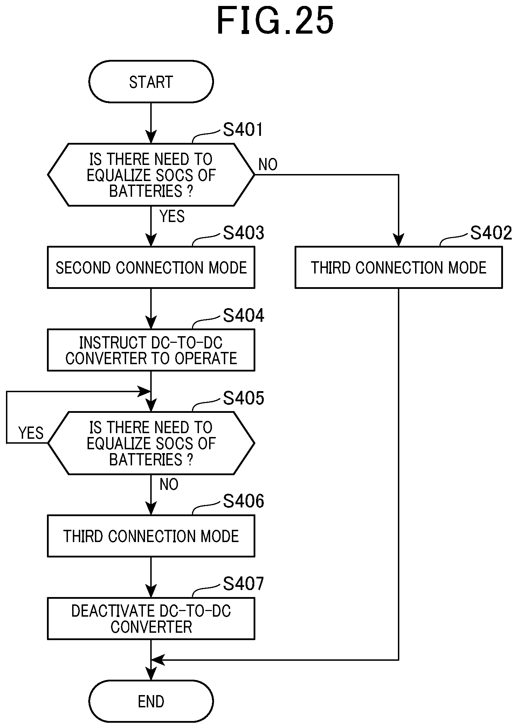

From this viewpoint, the control apparatus 100 according to the second modification may be configured to execute an equalization routine illustrated in Fig. 25 for equalizing the SOCs of the first to third batteries 31 to 33.

The control apparatus 100 is programmed to execute the equalization routine illustrated in Fig. 25 every predetermined period while both the vehicle is in the stop state and the second battery 32 is charged.

When starting the equalization routine illustrated in Fig. 25, the control apparatus 100 estimates the power storage state, i.e., the SOC, of each of the first to third batteries 31 to 33 to accordingly determine whether there is a need to equalize the SOCs of the first to third batteries 31 to 33 in step S401. The control apparatus 100 estimates the SOC of each of the first to third batteries 31 to 33 using one of the known estimation methods. For example, when the SOC of the second battery 32 is determined to be greater than or equal to a predetermined upper limit, the control apparatus 100 determines that there is a need to equalize the SOCs of the first to third batteries 31 to 33 (YES in step S401).

Additionally, when the SOC of the second battery 32 is determined to be greater than the SOC of the third battery 33 by a predetermined second equalization threshold or more, the control apparatus 100 determines that there is a need to equalize the SOCs of the first to third batteries 31 to 33 (YES in step S401).

Upon determination that there is not a need to equalize the SOCs of the first to third batteries 31 to 33 (NO in step S401), the control apparatus 100 sets the connection mode of the batteries 31 to 33 to the third connection mode in step S402. Specifically, if the connection mode of the batteries 31 to 33 has been the third connection mode before execution of the equalization routine, the control apparatus 100 continues the third connection mode. Otherwise, if the connection mode of the batteries 31 to 33 has not been the third connection mode, the control apparatus 100 changes the connection mode of the batteries 31 to 33 to the third connection mode. This results in, as illustrated in Fig. 23, power being supplied from the charging device 500 to the second battery 32, so that the second battery 32 is charged. Thereafter, the control apparatus 100 terminates the equalization routine illustrated in Fig. 25.

Otherwise, upon determination that there is a need to equalize the SOCs of the first to third batteries 31 to 33 (YES in step S401), the control apparatus 100 sets the connection mode of the batteries 31 to 33 to the second connection mode in step S403.

Following the operation in step S403, the control apparatus 100 instructs the DC-to-DC converter 70 to convert, i.e., boost, the input voltage inputted thereto from the second battery 32 through the power transmission line L3 in step S404. This enables the boosted power by the DC-to-DC converter 70 being supplied to the high-voltage loads 71 and/or the first battery 31 through the high-side power supply line H1, resulting in the second battery 32 being discharged.

Following the operation in step S404, the control apparatus 100 estimates the power storage state, i.e., the SOC, of each of the first to third batteries 31 to 33 to accordingly determine whether there is a need to equalize the SOCs of the first to third batteries 31 to 33 in step S405, which is identical to the determination in step S401. The criteria for the determination in step S405 is identical to that for determination in step S401, but the criteria for the determination in step S405 may be different from that for determination in step S401.

For example, the control apparatus 100 may be programmed to determine whether the SOC of the second battery 32 is within the predetermined allowable range and the absolute difference in SOC between the second and third batteries 32 and 33 is within the predetermined allowable difference range. Then, the control apparatus 100 may be programmed to determine that there is not a need to equalize the SOCs of the first to third batteries 31 to 33 upon determination that the SOC of the second battery 32 is within the predetermined allowable range and the absolute difference in SOC between the second and third batteries 32 and 33 is within the predetermined allowable difference range. Otherwise, the control apparatus 100 may be programmed to determine that there is a need to equalize the SOCs of the first to third batteries 31 to 33 upon determination that the SOC of the second battery 32 is not within the predetermined allowable range or the absolute difference in SOC between the second and third batteries 32 and 33 is not within the predetermined allowable difference range.

In response to determination that there is a need to equalize the SOCs of the first to third batteries 31 to 33 (YES in step S405), the control apparatus 100 iterates the determination in step S405 after lapse of a predetermined time as long as the determination in step S405 is NO.

That is, in response to determination that there is not a need to equalize the SOCs of the first to third batteries 31 to 33 (NO in step S405), the control apparatus 100 sets the connection mode of the batteries 31 to 33 to the third connection mode in step S406.

Specifically, in step S406, the control apparatus 100 turns off or maintains in the off state each of the first-A switch SW1a and the first-B switch SW1b, thus stopping the discharging of the second battery 32 (see Fig. 23). Following the operation in step S406, the control apparatus 100 deactivates the DC-to-DC converter 70 in step S407, and thereafter terminates the equalization routine illustrated in Fig. 25. This enables the SOC of the second battery 32 to be equalized to the SOC of the third battery 33. Additionally, discharged power from the second battery 32 is configured to be supplied to the high-voltage loads 71 and/or the first battery 31, making it possible to efficiently discharge, without power loss, the second battery 32 using a simpler power discharging configuration.

### Third modification

Each embodiment may be configured as the third modification to set the connection mode of the corresponding power supply system to the second connection mode independently of whether the corresponding power supply system includes the low-voltage power supply unit 80 during, for example, startup of the vehicle. Specifically, the control apparatus 100 of the third modification may be configured to supply high-voltage power from the first battery 31 to the high-voltage loads 71 through the high-side power supply line H1 and supply low-voltage power from the second battery 32 to the low-voltage loads 72 through the low-side power supply line H2 during startup of the vehicle.

The control apparatus 100 of the third modification, which continuously sets the connection mode of the batteries 31 to 33 to the second connection mode, may result in imbalance among the SOCs of the first to third batteries 31 to 33.

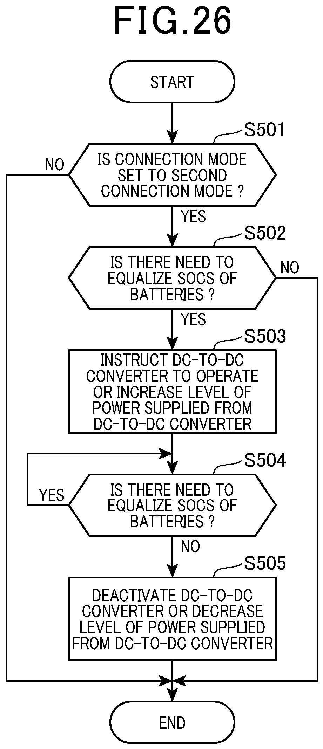

From this viewpoint, the control apparatus 100 according to the third modification may be configured to execute an equalization routine illustrated in Fig. 26 for equalizing the SOCs of the first to third batteries 31 to 33.

The control apparatus 100 is programmed to execute the stop-state equalization routine illustrated in Fig. 26 every predetermined period while connection mode of the batteries 31 to 33 is set to the second connection mode.

When starting the equalization routine illustrated in Fig. 26, the control apparatus 100 determines whether the connection mode of the batteries 31 to 33 is set to the second connection mode in step S501. Upon determination that the connection mode of the batteries 31 to 33 is not set to the second connection mode (NO in step S501), the control apparatus 100 terminates the equalization routine illustrated in Fig. 26.

Otherwise, upon determination that the connection mode of the batteries 31 to 33 is set to the second connection mode (YES in step S501), the control apparatus 100 estimates the power storage state, i.e., the SOC, of each of the first to third batteries 31 to 33 to accordingly determine whether there is a need to equalize the SOCs of the first to third batteries 31 to 33 in step S502. The control apparatus 100 estimates the SOC of each of the first to third batteries 31 to 33 using one of the known estimation methods.

For example, when the SOC of the second battery 32 is determined to be smaller than or equal to the predetermined lower limit, the control apparatus 100 determines that there is a need to equalize the SOCs of the first to third batteries 31 to 33 (YES in step S502).

Additionally, when the absolute difference in SOC between any pair of the first to third batteries 31 to 33 is determined to be greater than or equal to than a predetermined third equalization threshold, the control apparatus 100 determines that there is a need to equalize the SOCs of the first to third batteries 31 to 33 (YES in step S502).

Upon determination that there is not a need to equalize the SOCs of the first to third batteries 31 to 33 to one another (NO in step S502), the control apparatus 100 terminates the equalization routine illustrated in Fig. 26.

Otherwise, upon determination that there is a need to equalize the SOCs of the first to third batteries 31 to 33 (YES in step S502), the control apparatus 100 instructs the DC-to-DC converter 70 to convert, i.e., step down, the voltage of high-voltage power inputted thereto from the first battery 31, thus charging the second battery 32 based on the stepped-down voltage in step S503. Alternatively, in step S503, the control apparatus 100 instructs the DC-to-DC converter 70 to increase the level of power supplied from the DC-to-DC converter 70, thus increasing the amount of charge in the second battery 32.

When a predetermined time has elapsed since completion of the operation in step S503, the control apparatus 100 estimates the SOC of each of the first to third batteries 31 to 33 to accordingly determine whether there is a need to equalize the SOCs of the first to third batteries 31 to 33 in step S504, which is identical to the determination in step S502. The criteria for the determination in step S504 is identical to that for determination in step S502, but the criteria for the determination in step S504 may be different from that for determination in step S502.

For example, the control apparatus 100 may be programmed to determine whether the SOC of the second battery 32 is within the predetermined allowable range and the absolute difference in SOC between each pair of the first to third batteries 31 to 33 is within the predetermined allowable difference range. Then, the control apparatus 100 may be programmed to determine that there is not a need to equalize the SOCs of the first to third batteries 31 to 33 upon determination that the SOC of the second battery 32 is within the predetermined allowable range and the absolute difference in SOC between each pair of the first to third batteries 31 to 33 is within the predetermined allowable difference range. Otherwise, the control apparatus 100 may be programmed to determine that there is a need to equalize the SOCs of the first to third batteries 31 to 33 upon determination that the SOC of the second battery 32 is not within the predetermined allowable range or the absolute difference in SOC between any pair of the first to third batteries 31 to 33 is not within the predetermined allowable difference range.

In response to determination that there is a need to equalize the SOCs of the first to third batteries 31 to 33 (YES in step S504), the control apparatus 100 iterates the determination in step S504 after lapse of a predetermined time as long as the determination in step S504 is NO.

That is, in response to determination that there is not a need to equalize the SOCs of the first to third batteries 31 to 33 (NO in step S504), the control apparatus 100 deactivates the DC-to-DC converter 70 in step

S505. Alternatively, in step S505, the control apparatus 100 instructs the DC-to-DC converter 70 to decrease the level of power supplied from the DC-to-DC converter 70, thus decreasing the amount of charge in the second battery 32. After the operation in step S505, the control apparatus 100 terminates the equalization routine illustrated in Fig. 26.

This therefore enables the SOCs of the first to third batteries 31 to 33 to be equalized even when the connection mode of the batteries 31 to 33 is continuously set to the second connection mode.

### Fourth modification

The control apparatus 100 of each power supply system 30, 230, 330, 430 of the corresponding embodiment may be configured to set the connection mode of the batteries 31 to 33 to the second connection model while the power supply system 30, 230, 330, 430 is connected to the charging device for charging the second battery 32. For example, while the power supply system 30 of the first embodiment is connected to the charging device 500 set forth above, the control apparatus 100 may be configured to set the connection mode of the batteries 31 to 33 to the second connection mode. This enables the charging device 500 to charge the second battery 32 while the first battery 31 supplies power to the high-voltage loads 71.

As described above, charging the second battery 32 in the second connection mode may result in imbalance among the SOCs of the first to third batteries 31 to 33.

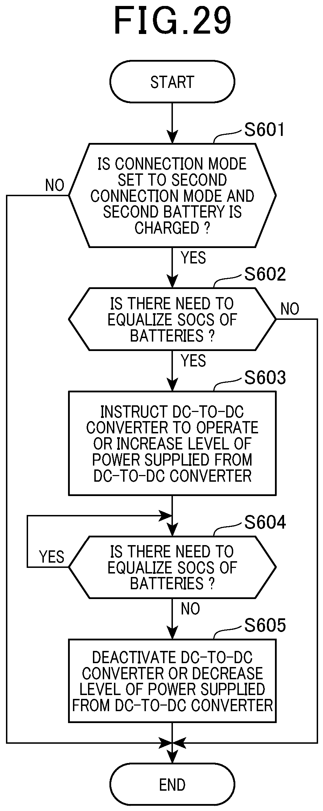

From this viewpoint, the control apparatus 100 according to the fourth modification may be configured to execute an equalization routine illustrated in Fig. 29 for equalizing the SOCs of the first to third batteries 31 to 33.

The control apparatus 100 is programmed to execute the equalization routine illustrated in Fig. 29 every predetermined period while both the second battery 32 is charged by the charging device 500 and the second connection mode is set to the connection mode of the batteries 31 to 33.

When starting the equalization routine illustrated in Fig. 29, the control apparatus 100 determines whether the connection mode of the batteries 31 to 33 is set to the second connection mode and the second battery 32 is charged by the charging device 500 in step S601. Upon determination that the connection mode of the batteries 31 to 33 is not set to the second connection mode or the second battery 32 is not charged by the charging device 500 (NO in step S601), the control apparatus 100 terminates the equalization routine illustrated in Fig. 29.

Otherwise, upon determination that the connection mode of the batteries 31 to 33 is set to the second connection mode and the second battery 32 is charged by the charging device 500 (YES in step S601), the control apparatus 100 estimates the power storage state, i.e., the SOC, of each of the first to third batteries 31 to 33 to accordingly determine whether there is a need to equalize the SOCs of the first to third batteries 31 to 33 in step S602. The control apparatus 100 estimates the SOC of each of the first to third batteries 31 to 33 using one of the known estimation methods.

For example, when the SOC of the second battery 32 is determined to be greater than or equal to the predetermined upper limit, the control apparatus 100 determines that there is a need to equalize the SOCs of the first to third batteries 31 to 33 (YES in step S602).

Additionally, when the absolute difference in SOC between any pair of the first to third batteries 31 to 33 is determined to be greater than or equal to the SOC of the third battery 33 by a predetermined fourth equalization threshold, the control apparatus 100 determines that there is a need to equalize the SOCs of the first to third batteries 31 to 33 (YES in step S602).

Upon determination that there is not a need to equalize the SOCs of the first to third batteries 31 to 33 (NO in step S602), the control apparatus 100 terminates the equalization routine illustrated in Fig. 29.

Otherwise, upon determination that there is a need to equalize the SOCs of the first to third batteries 31 to 33 (YES in step S602), the control apparatus 100 instructs the DC-to-DC converter 70 to (i) boost the voltage of low-voltage power inputted thereto from the second battery 32, and (ii) supply the boosted power to, for example, the high-voltage loads 71, thus discharging the second battery 32 in step S603. Alternatively, in step S603, when the DC-to-DC converter 70 is activated, the control apparatus 100 instructs the DC-to-DC converter 70 to increase the level of power inputted to the DC-to-DC converter 70, thus increasing the amount of discharge from the second battery 32.

When a predetermined time has elapsed since completion of the operation in step S603, the control apparatus 100 estimates the SOC of each of the first to third batteries 31 to 33 to accordingly determine whether there is a need to equalize the SOCs of the first to third batteries 31 to 33 in step S604, which is identical to the determination in step S602. The criteria for the determination in step S604 is identical to that for determination in step S602, but the criteria for the determination in step S604 may be different from that for determination in step S602.

For example, the control apparatus 100 may be programmed to determine whether the SOC of the second battery 32 is within the predetermined allowable range and the absolute difference in SOC between each pair of the first to third batteries 31 to 33 is within the predetermined allowable difference range. Then, the control apparatus 100 may be programmed to determine that there is not a need to equalize the SOCs of the first to third batteries 31 to 33 r upon determination that the SOC of the second battery 32 is within the predetermined allowable range and the absolute difference in SOC between each pair of the first to third batteries 31 to 33 is within the predetermined allowable difference range. Otherwise, the control apparatus 100 may be programmed to determine that there is a need to equalize the SOCs of the first to third batteries 31 to 33 upon determination that the SOC of the second battery 32 is not within the predetermined allowable range or the absolute difference in SOC between any pair of the first to third batteries 31 to 33 is not within the predetermined allowable difference range.

In response to determination that there is a need to equalize the SOCs of the first to third batteries 31 to 33 (YES in step S604), the control apparatus 100 iterates the determination in step S604 after lapse of a predetermined time as long as the determination in step S604 is NO.

That is, in response to determination that there is not a need to equalize the SOCs of the first to third batteries 31 to 33 (NO in step S604), the control apparatus 100 deactivates the DC-to-DC converter 70 in step S605. Alternatively, in step S605, the control apparatus 100 instructs the DC-to-DC converter 70 to decrease the level of power inputted to the DC-to-DC converter 70, thus decreasing the amount of discharge from the second battery 32. After the operation in step S605, the control apparatus 100 terminates the equalization routine illustrated in Fig. 29.

This therefore enables the SOCs of the first to third batteries 31 to 33 to be equalized even when the connection mode of the batteries 31 to 33 is continuously set to the second connection mode.

### Fifth modification

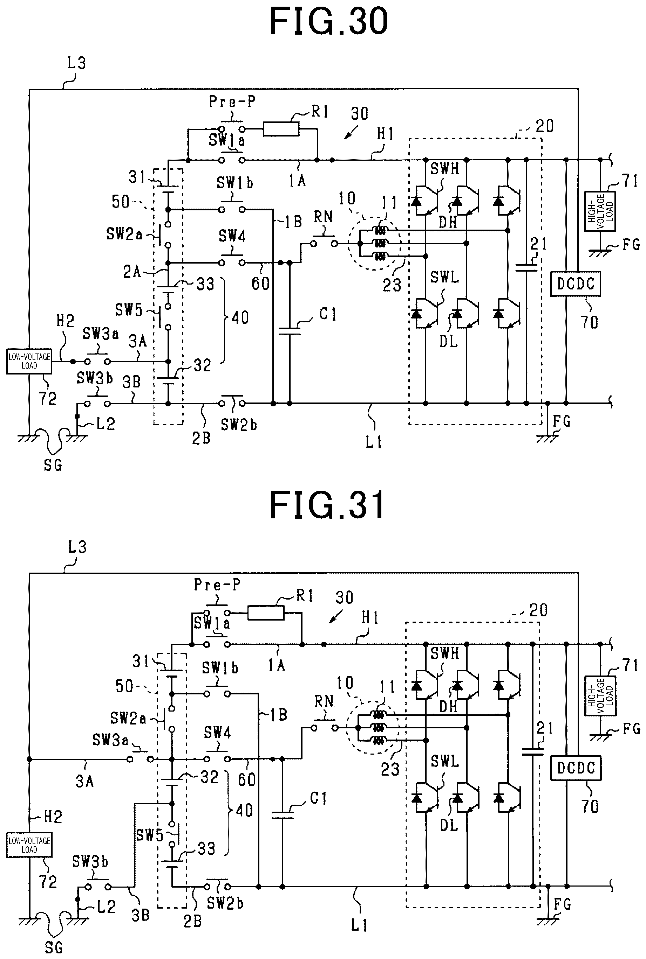

A switch may be provided between the second battery 32 and the third battery 33 in each of the power supply systems 30, 230, 330, and 430; the switch is configured to switchably select one of electrical conduction between the second and third batteries 32 and 33 and electrical cutoff therebetween. For example, as illustrated in Fig. 30, a switch SW5 may be provided between the positive terminal of the second battery 32 and the negative terminal of the third battery 33 in the power supply system 30; the switch SW5 is configured to switchably select one of (i) electrical conduction between the second and third batteries 32 and 33 and (ii) electrical cutoff therebetween. The switch SW5 may serve as such a second-A switch that enables (i) electrical conduction through the second-A electrical path 2A and (ii) electrical cutoff therethrough to be switched therebetween.

### Sixth modification

The arrangement of the second and third batteries 32 and 33 in each of the power supply systems 30, 230, 330, and 430 may be changed. For example, as illustrated in Fig. 31, the first battery 31, the second battery 32, and the third battery 33 may be connected in series to one another in this order from the high-voltage power supply line H1 to the high-side ground line L1 in the power supply system 30 of the first embodiment. In the sixth modification, such a switch SW5 may be provided between the negative terminal of the second battery 32 and the positive terminal of the third battery 33.

### Seventh modification

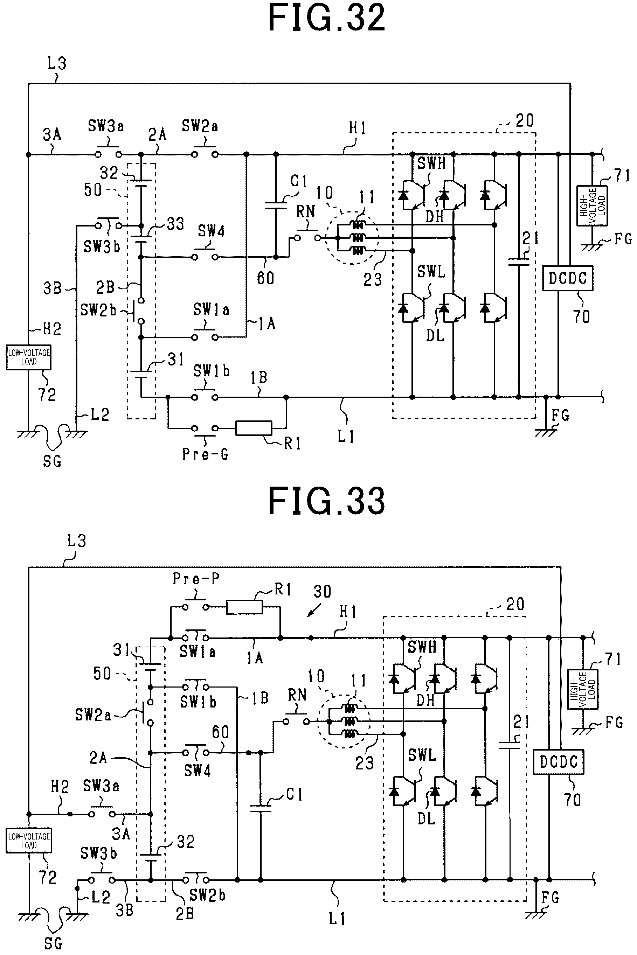

The arrangement of the first to third batteries 31 to 33 in each of the power supply systems 30 and 230 may be changed. For example, as illustrated in Fig. 32, the second battery 32, the third battery 33, and the first battery 31 may be connected to one another in this order from the high-voltage power supply line H1 to the high-side ground line L1 in the power supply system 30 of the first embodiment. The bypass path 60 according to this seventh modification may serve as a path connecting between the negative terminal of the first series-connection module 40, i.e., the negative terminal of the third battery 33, and the neutral point of the motor 10. A series-connection module, which is comprised of a pre-charge switch Pre-G and the resistor R1 connected in series to one another, may be connected in parallel to the second-A switch SW1b.

### Eighth modification

The third battery 33 may be omitted in each of the power supply systems 30, 230, 330, and 430. For example, as illustrated in Fig. 33, no third battery 33 may be provided in the power supply system 30 of the first embodiment. In the eighth modification of each of the power supply systems 230 and 330 of the second and third embodiments, which includes no third battery 33, the terminal voltage across the second battery 32 should be substantially identical to the terminal voltage across the first battery 31.

### Other modifications

In each of the embodiments and modifications, at least one series-connection module comprised of a pre-charge switch and a resistor is connected in parallel to a switch arranged to be closer to the high-side power supply line than to the low-side ground line. At least one additional series-connection module comprised of a pre-charge switch and a resistor may be provided to be connected in parallel to a switch arranged to be closer to the low-side power supply line than to the high-side ground line.

In each of the embodiments and modifications, the control apparatus is configured to determine whether there is a need to equalize the SOCs of the first to third batteries 31 to 33. The control apparatus according to each of the embodiments and modifications may be configured to measure or estimate, as the power storage state, the remaining capacity of each of the first to third batteries 31 to 33 and determine whether there is a need to equalize the SOCs of the first to third batteries 31 to 33 using the measured or estimated remaining capacity of each of the first to third batteries 31 to 33. Alternatively, the control apparatus according to each of the embodiments and modifications may be configured to measure or estimate, as the power storage state, the voltage across each of the first to third batteries 31 to 33 and determine whether there is a need to equalize the SOCs of the first to third batteries 31 to 33 using the measured or estimated voltage across each of the first to third batteries 31 to 33.

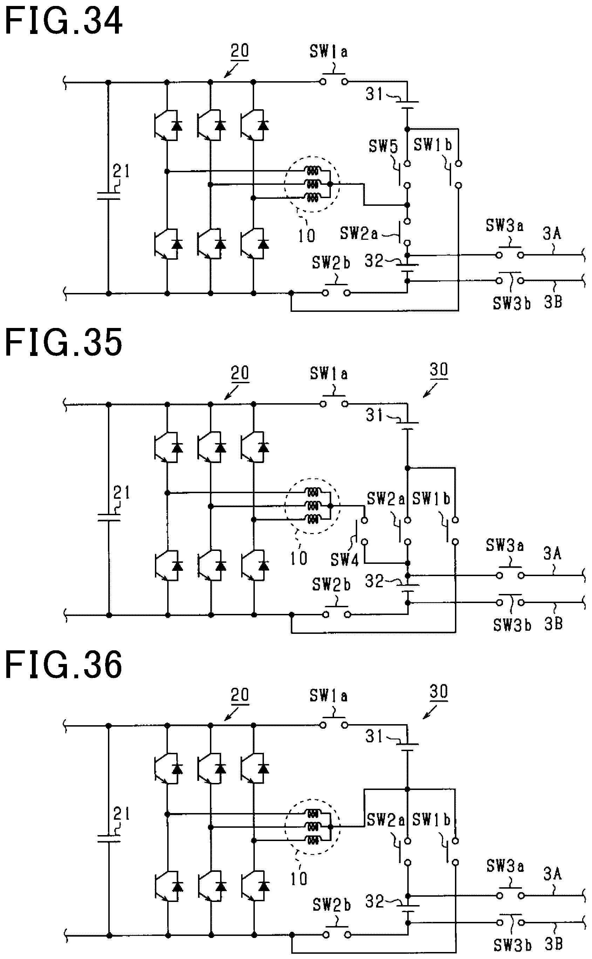

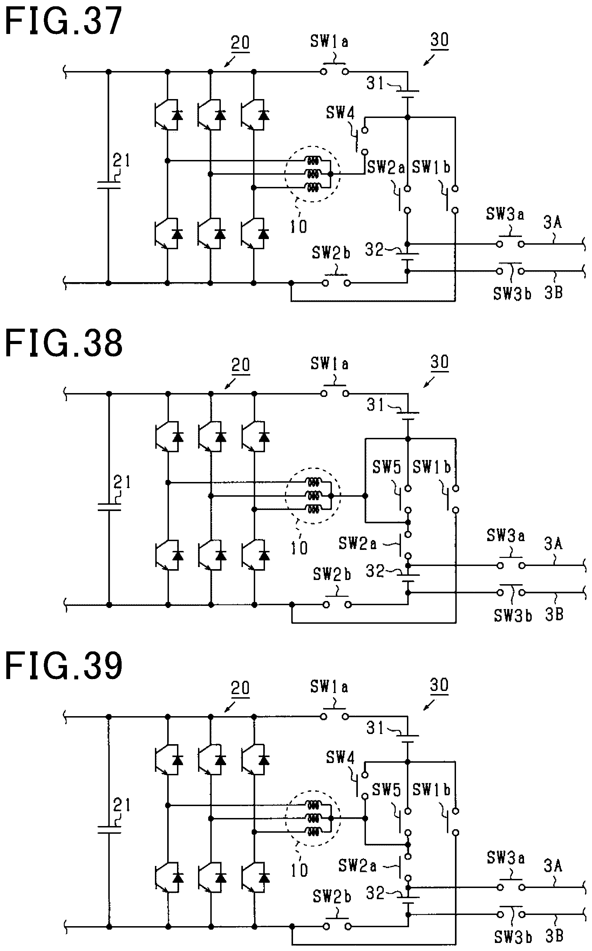

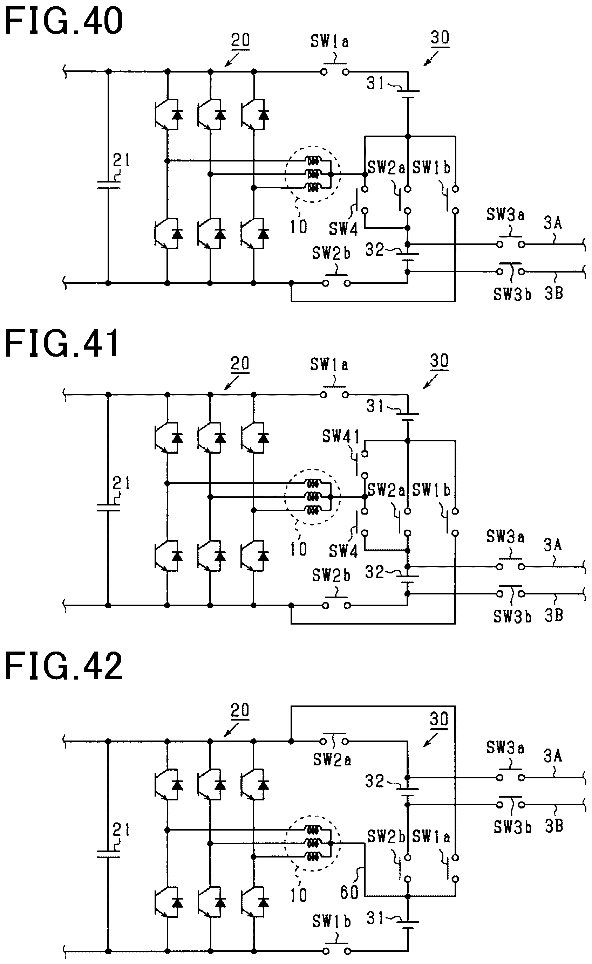

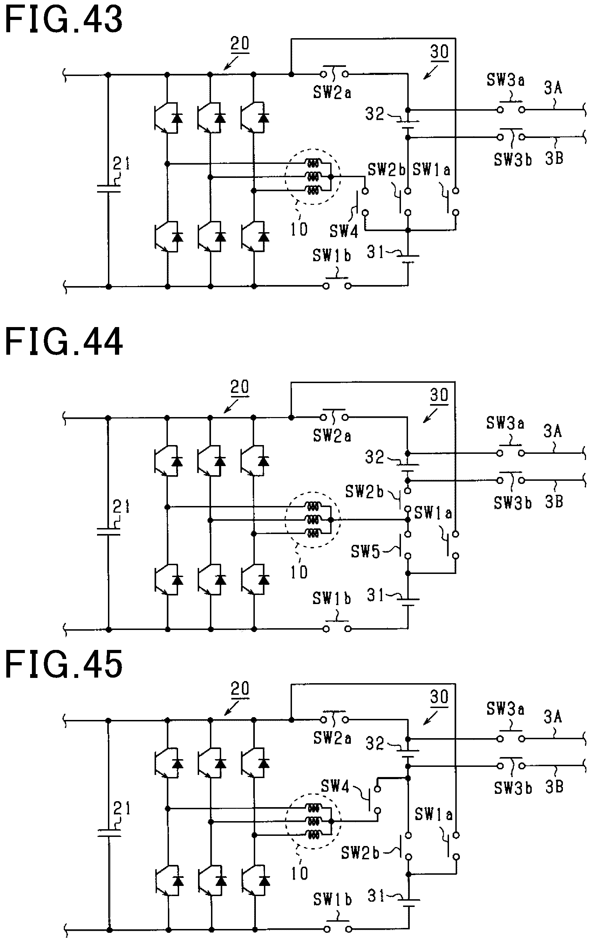

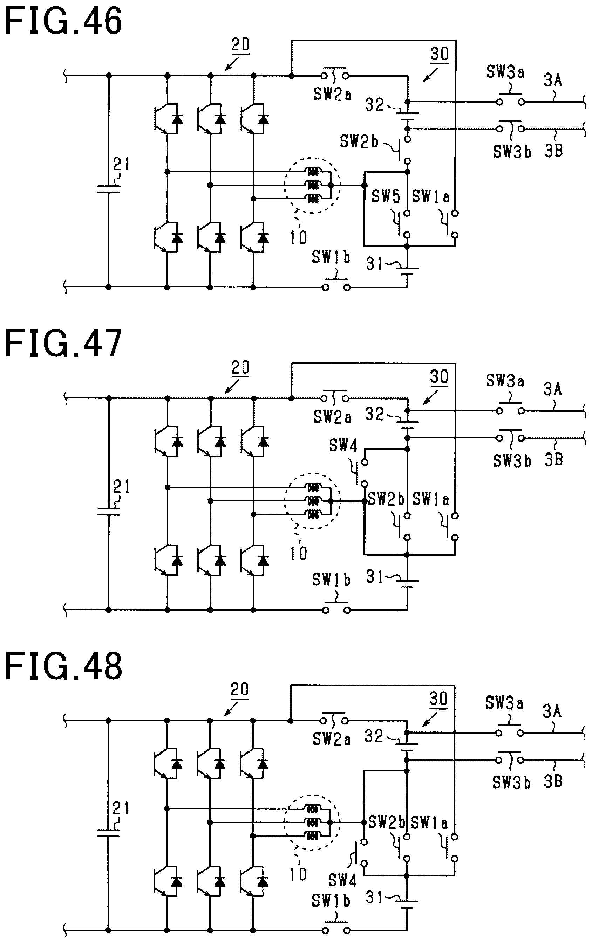

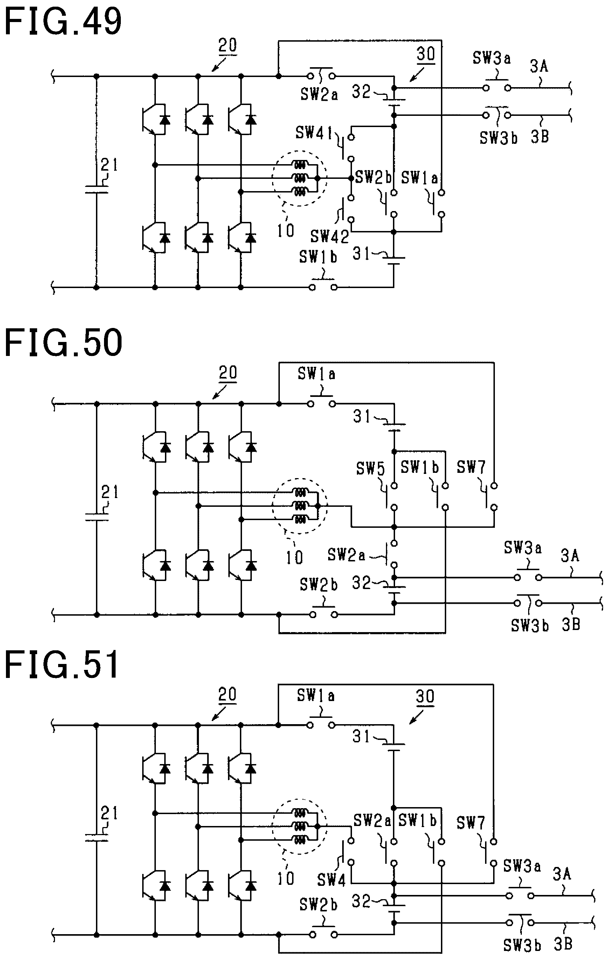

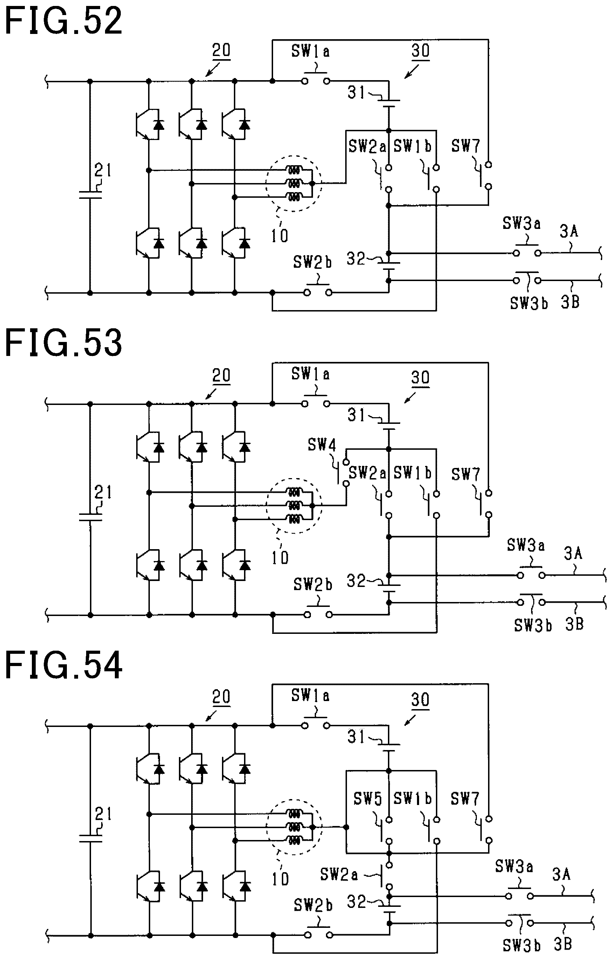

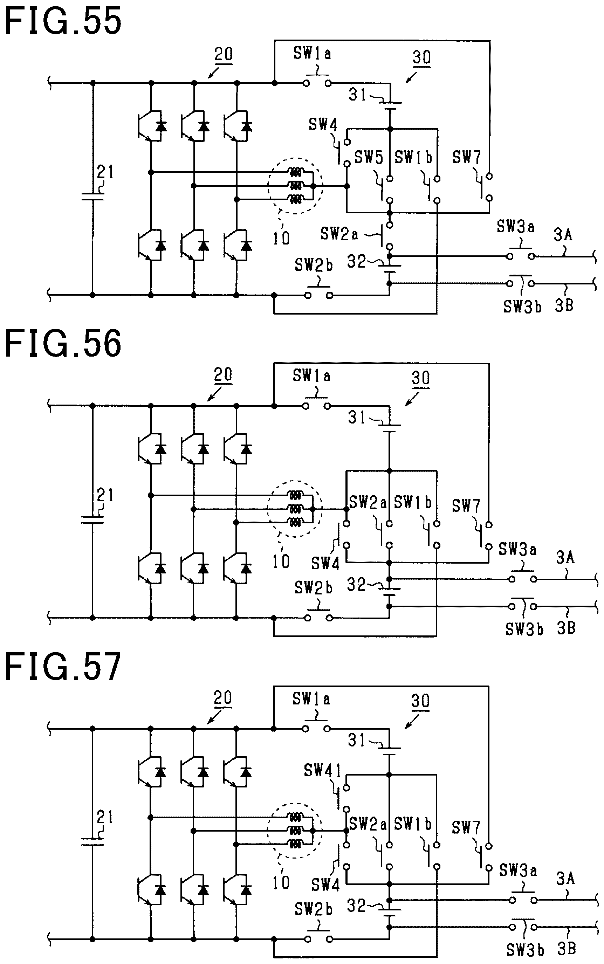

The configuration of the power supply system 30 of the first embodiment can be modified to have any one of the following configurations illustrated in respective Figs. 34 to 57.

The control apparatus of each of the embodiments and modifications may be configured to determine that there is an anomaly in power supply from the low-voltage power supply unit 80 to the low-voltage loads 72 in, for example, step S303 upon detecting at least one of (i) a failure in the low-voltage power supply unit 80, (ii) a failure in the DC-to-DC converter 70, (iii) a ground fault of the power supply line L3 or the low-side power supply line H2, and (iv) a failure in one of the batteries 31 to 33 that is supplying power to the DC-to-DC converter 70.

The control apparatus of the fourth embodiment may be configured to instruct only the first inverter 420a to operate when changing the connection mode of the batteries 31 to 33 from the first connection mode to the second connection mode. This modification prevents a failure in the switches of the second inverter 420b when cutting off power supply between the second inverter 420b and the second and third batteries 32 and 33 while reducing torque fluctuations due to the power-supply cutoff.

Each switch SW according to each of the embodiments and modifications is not limited to a single switch, and may be comprised of a series module of plural switches connected in series to each other or a parallel module of plural switches connected in parallel to each other.

Each of the upper- and lower-arm switches of each of the inverters 20, 420a, and 420b is not limited to an IGBT. Specifically, an N-channel MOSFET having an intrinsic diode may be used as each of the upper- and lower-arm switches of each of the inverters 20, 420a, and 420b.

The connection configuration of the armature windings 11 of the motor 10 is not limited to the star configuration. Specifically, delta configuration may be used as the connection configuration of the armature windings 11 of the motor 10. The motor 10 may be configured as a two-phase motor or a four or more-phase motor, and each inverter may be configured as a two-phase inverter or a four or more-phase inverter.

The motor 10 is not limited to a permanent magnet synchronous machine that includes permanent magnets as field poles mounted to the rotor thereof. Specifically, the motor 10 may be configured as a wound field synchronous machine that includes field windings as field poles mounted to the rotor thereof. Such a wound field synchronous motor may include both permanent magnets and field windings mounted to the rotor thereof. The motor 10 may not be limited to a synchronous machine, and may be configured as an induction machine.

In each of the embodiments and modifications, the power storages are not limited to batteries. Specifically, electrical double layer capacitors with, for example, high capacity may be used as the power storages. Additionally, a set of a battery and an electrical double layer capacitor may be used as each power storage.

In each of the embodiments and modifications, the third battery 33 is more heavily used as compared with the other batteries. For this reason, a battery having more excellent durability, more excellent safety, and high capacity may be used as the third battery 33.

Each power supply system disclosed in the embodiments and the modifications is not limited being installed in a vehicle. Specifically, each power supply system according to the present disclosure may be installed in mobile objects, such as aircraft or ships, or stationary objects.

The control apparatuses and their methods according to the present disclosure may be implemented by a dedicated computer including a memory and a processor programmed to perform one or more functions embodied by one or more computer programs.

The control apparatuses and their methods according to the present disclosure may also be implemented by a dedicated computer including a processor comprised of one or more dedicated hardware logic circuits.

The control apparatuses and their methods according to the present disclosure may further be implemented by a processor system comprised of a memory, a processor programmed to perform one or more functions embodied by one or more computer programs, and one or more hardware logic circuits.

The one or more programs may be stored in a computer-readable non-transitory storage medium as instructions to be carried out by a computer or a processor.

The following describes features extracted from the above embodiments.

### [FEATURE 1]

A power supply system (30, 230, 330, 430) according to the feature 1 is connected to both (i) a high-side power supply line (H1) connected to a high-voltage load (71) and (ii) a low-side power supply line (H2) connected to a low-voltage load (72).

The power supply system includes a plurality of power storages (31, 32, 33), a switch unit (SWs) for connection-mode switching of the power storages, and a switch controller (100) configured to control the switch unit to set a connection mode of the power storages to one of (i) a first connection mode in which a part or all of the power storages is connected between the high-side power supply line and a low-side ground line (L1), and (ii) a third connection mode in which power supply between the high-side ground line and a low-side ground line (L2) is cut off and a part of the power storages is connected between the low-side power supply line and the low-side ground line.

### [FEATURE 2]

In the power supply system of the feature 2, which depends from the feature 1, the switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line.

### [FEATURE 3]

In the power supply system of the feature 3, which depends from the feature 1 or 2, the switch controller is configured to control the switch unit to set the connection mode of the power storages to a second connection mode in which at least one power storage of the power storages is connected between the low-side power supply line and the low-side ground line and at least one remaining power storage of the power storages is connected between the high-side power supply line and the high-side ground line, so that the high-side ground line and the low-side ground line are electrically isolated from one another.

### [FEATURE 4]

In the power supply system of the feature 4, which depends from the feature 3, the power storages include a first power storage (31), a second power storage (32) lower in voltage than the first power storage, and a third power storage (33) connected in series to the second power storage, each of the first, second, and third power storages having a positive terminal and a negative terminal. The switch unit includes a first-A switch (SW1a) mounted on a first-A electrical path (1A) connecting between the positive terminal of the first power storage and the high-side power supply line, and a first-B switch (SW1b) mounted on a first-B electrical path (1B) connecting between the negative terminal of the first power storage and the high-side ground line, the second power storage and the third power storage being connected in series to one another to constitute a first series-connection module (40) that has a positive terminal and a negative terminal. The switch unit includes a second-A switch (SW2a, SW5) configured to switch between electrical connection and electrical cutoff of a second-A electrical path (2A), the second-A electrical path (2A) connecting between the positive terminal of the first series-connection module and the negative terminal of the first power storage, and a second-B switch (SW2b) mounted on a second-B electrical path (2B) connecting between the negative terminal of the first series-connection module and the high-side ground line. The switch unit includes a third-A switch (SW3a) mounted on a third-A electrical path (3A) connecting between the positive terminal of the second power storage and the low-side power supply line, and a third-B switch (SW3b) mounted on a third-B electrical path (3B) connecting between the negative terminal of the second power storage and the low-side ground line. The switch controller is configured to turn off or maintain in an off state each of the first-B switch, the third-A switch, and the third-B switch and turn on or maintain in an on state each of the first-A switch, the second-A switch, and the second-B switch to set the connection mode of the power storages to the first connection mode, and turn off or maintain in the off state each of the second-A switch and the second-B switch and turn on or maintain in the on state each of the first-A switch, the first-B switch, the third-A switch, and the third-B switch to set the connection mode of the power storages to the second connection mode.

### [FEATURE 5]

The power supply system of the feature 5, which depends from the feature 4, is connected to an inverter (20) through the high-side power supply line and the high-side ground line, the inverter being connected to a motor (10) that includes one or more armature windings (11) that have a neutral point. The switch unit includes a fourth switch (SW4) mounted on a bypass path (60) connecting between the neutral point of the one or more armature windings of the motor and the positive terminal of the first series-connection module. The switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line. The switch controller is configured to turn off or maintain in the off state each of the first-B switch, the third-A switch, the third-B switch, and the fourth switch and turn on or maintain in the on state each of the first-A switch, the second-A switch, and the second-B switch to set the connection mode of the power storages to the first series-connection mode. The switch controller is configured to turn off or maintain in the off state each of the second-A switch, the third-A switch, and the third-B switch and turn on or maintain in the on state each of the first-A switch, the first-B switch, the second-B switch, and the fourth switch to set the connection mode of the power storages to the first parallel-connection mode.

### [FEATURE 6]

In the power supply system of the feature 6, which depends from the feature 4, the switch unit includes a fourth switch (SW4) mounted on a bypass path (160) connecting between the positive terminal of the first series-connection module and the high-side power supply line. The switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line. The switch controller is configured to turn off or maintain in the off state each of the first-B switch, the third-A switch, the third-B switch, and the fourth switch and turn on or maintain in the on state each of the first-A switch, the second-A switch, and the second-B switch to set the connection mode of the power storages to the first series-connection mode. The switch controller is configured to turn off or maintain in the off state each of the second-A switch, the third-A switch, and the third-B switch and turn on or maintain in the on state each of the first-A switch, the first-B switch, the second-B switch, and the fourth switch to set the connection mode of the power storages to the first parallel-connection mode.

### [FEATURE 7]

In the power supply system of the feature 7, which depends from the feature 3, the power storages include a first power storage (31), a second power storage (32) lower in voltage than the first power storage, and a third power storage (33) connected in series to the second power storage, each of the first, second, and third power storages having a positive terminal and a negative terminal. The switch unit includes (i) a first-A switch (SW1a) mounted on a first-A electrical path (1A) connecting between the positive terminal of the first power storage and the high-side power supply line, (ii) a first-B switch (SW1b) mounted on a first-B electrical path (1B) connecting between the negative terminal of the first power storage and the high-side ground line, the second power storage and the third power storage being connected in series to one another to constitute a first series-connection module (40) that has a positive terminal and a negative terminal, (iii) a second-A switch (SW2a, SW5) configured to switch between electrical connection and electrical cutoff of a second-A electrical path (2A), the second-A electrical path (2A) connecting between the positive terminal of the first series-connection module and the high-side power supply line, (iv) a second-B switch (SW2b) mounted on a second-B electrical path (2B) connecting between the negative terminal of the first series-connection module and the positive terminal of the first power storage, (v) a third-A switch (SW3a) mounted on a third-A electrical path (3A) connecting between the positive terminal of the second power storage and the low-side power supply line, and (vi) a third-B switch (SW3b) mounted on a third-B electrical path (3B) connecting between the negative terminal of the second power storage and the low-side ground line. The switch controller is configured to turn off or maintain in an off state each of the first-A switch, the third-A switch, and the third-B switch and turn on or maintain in an on state each of the first-B switch, the second-A switch, and the second-B switch to set the connection mode of the power storages to the first connection mode. The switch controller is configured to turn off or maintain in the off state each of the second-A switch and the second-B switch and turn on or maintain in the on state each of the first-A switch, the first-B switch, the third-A switch, and the third-B switch to set the connection mode of the power storages to the second connection mode.

### [FEATURE 8]

The power supply system of the feature 8, which depends from the feature 7, is connected to an inverter (20) through the high-side power supply line and the high-side ground line, the inverter being connected to a motor (10) that includes one or more armature windings (11) that have a neutral point. The switch unit includes a fourth switch (SW4) mounted on a bypass path (60) connecting between the neutral point of the one or more armature windings of the motor and the negative terminal of the first series-connection module. The switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line. The switch controller is configured to turn off or maintain in the off state each of the first-A switch, the third-A switch, the third-B switch, and the fourth switch and turn on or maintain in the on state each of the first-B switch, the second-A switch, and the second-B switch to set the connection mode of the power storages to the first series-connection mode. The switch controller is configured to turn off or maintain in the off state each of the second-B switch, the third-A switch, and the third-B switch and turn on or maintain in the on state each of the first-A switch, the first-B switch, the second-A switch, and the fourth switch to set the connection mode of the power storages to the first parallel-connection mode.

### [FEATURE 9]

In the power supply system of the feature 8, which depends from the feature 7, the switch unit includes a fourth switch (SW4) mounted on a bypass path (160) connecting between the negative terminal of the first series-connection module and the high-side ground line. The switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line. The switch controller is configured to turn off or maintain in the off state each of the first-A switch, the third-A switch, the third-B switch, and the fourth switch and turn on or maintain in the on state each of the first-B switch, the second-A switch, and the second-B switch to set the connection mode of the power storages to the first series-connection mode. The switch controller is configured to turn off or maintain in the off state each of the second-B switch, the third-A switch, and the third-B switch and turn on or maintain in the on state each of the first-A switch, the first-B switch, the second-A switch, and the fourth switch to set the connection mode of the power storages to the first parallel-connection mode.

### [FEATURE 10]

In the power supply system of the feature 10, which depends from the feature 3, the power storages include a first power storage (31), a second power storage (32) lower in voltage than the first power storage, and a third power storage (33) connected in series to the second power storage, each of the first, second, and third power storages having a positive terminal and a negative terminal. The switch unit includes a first-A switch (SW1a) mounted on a first-A electrical path (1A) connecting between the positive terminal of the first power storage and the high-side power supply line, and a first-B switch (SW1b) mounted on a first-B electrical path (1B) connecting between the negative terminal of the first power storage and the high-side ground line, the second power storage and the third power storage being connected in series to one another to constitute a first series-connection module (40) that has a positive terminal and a negative terminal. The switch unit includes a second-A switch (SW2a, SW5) configured to switch between electrical connection and electrical cutoff of a second-A electrical path (2A), the second-A electrical path (2A) connecting between the positive terminal of the first series-connection module and the high-side power supply line, and a second-B switch (SW2b) mounted on a second-B electrical path (2B) connecting between the negative terminal of the first series-connection module and the high-side ground line. The switch unit includes a third-A switch (SW3a) mounted on a third-A electrical path (3A) connecting between the positive terminal of the second power storage and the low-side power supply line, and a third-B switch (SW3b) mounted on a third-B electrical path (3B) connecting between the negative terminal of the second power storage and the low-side ground line. The switch controller is configured to turn off or maintain in an off state each of the third-A switch and the third-B switch and turn on or maintain in an on state each of the first-A switch, the first-B switch, the second-A switch, and the second-B switch to set the connection mode of the power storages to the first connection mode. The switch controller is configured to turn off or maintain in the off state each of the second-A switch and the second-B switch and turn on or maintain in the on state each of the first-A switch, the first-B switch, the third-A switch, and the third-B switch to set the connection mode of the power storages to the second connection mode.

### [FEATURE 11]

In the power supply system of the feature 11, which depends from the feature 3, the high-side power supply line includes a first high-side power supply line (H401) and a second high-side power supply line (H402). The high-side ground line includes a first high-side ground line (L401) and a second low-side ground line (L402). The power storages include a first power storage (31), a second power storage (32) lower in voltage than the first power storage, and a third power storage (33) connected in series to the second power storage, each of the first, second, and third power storages having a positive terminal and a negative terminal. The power supply system is connected to a first inverter (420a) through the first high-side power supply line, a motor (10) including one or more armature windings (11), each of which has a first end and a second end, the first inverter being connected to the first ends of the one or more armature windings of the motor, the power supply system being configured to transmit power between the first inverter and the first power storage. The power supply system is connected to a second inverter (420b) through the second high-side power supply line, the second inverter being connected to the second ends of the one or more armature windings of the motor, the second power storage and the third power storage being connected in series to one another to constitute a first series-connection module (40) that has a positive terminal and a negative terminal, the power supply system being configured to transmit power between the second inverter and the first series-connection module. The switch unit includes a first-A switch (SW1a) mounted on a first-A electrical path (1A) connecting between the positive terminal of the first power storage and the first high-side power supply line, and a first-B switch (SW1b) mounted on a first-B electrical path (1B) connecting between the negative terminal of the first power storage and the first high-side ground line. The switch unit includes a second-A switch (SW2a, SW5) configured to switch between electrical connection and electrical cutoff of a second-A electrical path (2A), the second-A electrical path (2A) connecting between the positive terminal of the first series-connection module and the second high-side power supply line, and a second-B switch (SW2b) mounted on a second-B electrical path (2B) connecting between the negative terminal of the first series-connection module and the second high-side ground line. The switch unit includes a third-A switch (SW3a) mounted on a third-A electrical path (3A) connecting between the positive terminal of the second power storage and the low-side power supply line, and a third-B switch (SW3b) mounted on a third-B electrical path (3B) connecting between the negative terminal of the second power storage and the low-side ground line. The switch controller is configured to turn off or maintain in an off state each of the third-A switch and the third-B switch and turn on or maintain in an on state each of the first-A switch, the first-B switch, the second-A switch, and the second-B switch to set the connection mode of the power storages to the first connection mode. The switch controller is configured to turn off or maintain in the off state each of the second-A switch and the second-B switch and turn on or maintain in the on state each of the first-A switch, the first-B switch, the third-A switch, and the third-B switch to set the connection mode of the power storages to the second connection mode.

### [FEATURE 12]

In the power supply system of the feature 12, which depends from the feature 3, the power storages include a first power storage (31) and a second power storage (32) lower in voltage than the first power storage, each of the first and second power storages having a positive terminal and a negative terminal. The switch unit includes a first-A switch (SW1a) mounted on a first-A electrical path (1A) connecting between the positive terminal of the first power storage and the high-side power supply line, and a first-B switch (SW1b) mounted on a first-B electrical path (1B) connecting between the negative terminal of the first power storage and the high-side ground line. The switch unit includes a second-A switch (SW2a, SW5) configured to switch between electrical connection and electrical cutoff of a second-A electrical path (2A), the second-A electrical path (2A) connecting between the positive terminal of the second power storage and the negative terminal of the first power storage, and a second-B switch (SW2b) mounted on a second-B electrical path (2B) connecting between the negative terminal of the second power storage and the high-side ground line. The switch unit includes a third-A switch (SW3a) mounted on a third-A electrical path (3A) connecting between the positive terminal of the second power storage and the low-side power supply line, and a third-B switch (SW3b) mounted on a third-B electrical path (3B) connecting between the negative terminal of the second power storage and the low-side ground line. The switch controller is configured to turn off or maintain in an off state each of the first-B switch, the third-A switch, and the third-B switch and turn on or maintain in an on state each of the first-A switch, the second-A switch, and the second-B switch to set the connection mode of the power storages to the first connection mode. The switch controller is configured to turn off or maintain in the off state each of the second-A switch and the second-B switch and turn on or maintain in the on state each of the first-A switch, the first-B switch, the third-A switch, and the third-B switch to set the connection mode of the power storages to the second connection mode.

### [FEATURE 13]

The power supply system of the feature 13, which depends from the feature 12, is connected to an inverter (20) through the high-side power supply line and the high-side ground line, the inverter being connected to a motor (10) that includes one or more armature windings (11) that have a neutral point. The switch unit includes a fourth switch (SW4) mounted on a bypass path (60) connecting between the neutral point of the one or more armature windings of the motor and the positive terminal of the second power storage. The switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line. The switch controller is configured to turn off or maintain in the off state each of the first-B switch, the third-A switch, the third-B switch, and the fourth switch and turn on or maintain in the on state each of the first-A switch, the second-A switch, and the second-B switch to set the connection mode of the power storages to the first series-connection mode. The switch controller is configured to turn off or maintain in the off state each of the second-A switch, the third-A switch, and the third-B switch and turn on or maintain in the on state each of the first-A switch, the first-B switch, the second-B switch, and the fourth switch to set the connection mode of the power storages to the first parallel-connection mode.

### [FEATURE 14]

In the power supply system of the feature 14, which depends from the feature 3, the power storages include a first power storage (31) and a second power storage (32) lower in voltage than the first power storage, each of the first and second power storages having a positive terminal and a negative terminal. The switch unit includes a first-A switch (SW1a) mounted on a first-A electrical path (1A) connecting between the positive terminal of the first power storage and the high-side power supply line, and a first-B switch (SW1b) mounted on a first-B electrical path (1B) connecting between the negative terminal of the first power storage and the high-side ground line. The switch unit includes a second-A switch (SW2a) mounted on a second-A electrical path (2A) connecting between the positive terminal of the second power storage and the high-side power supply line, and a second-B switch (SW2b) mounted on a second-B electrical path (2B) connecting between the negative terminal of the second power storage and the positive terminal of the first power storage. The switch unit includes a third-A switch (SW3a) mounted on a third-A electrical path (3A) connecting between the positive terminal of the second power storage and the low-side power supply line, and a third-B switch (SW3b) mounted on a third-B electrical path (3B) connecting between the negative terminal of the second power storage and the low-side ground line. The switch controller is configured to turn off or maintain in an off state each of the first-A switch, the third-A switch, and the third-B switch and turn on or maintain in an on state each of the first-B switch, the second-A switch, and the second-B switch to set the connection mode of the power storages to the first connection mode. The switch controller is configured to turn off or maintain in the off state each of the second-A switch and the second-B switch and turn on or maintain in the on state each of the first-A switch, the first-B switch, the third-A switch, and the third-B switch to set the connection mode of the power storages to the second connection mode.

### [FEATURE 15]

The power supply system of the feature 15, which depends from the feature 14, is connected to an inverter (20) through the high-side power supply line and the high-side ground line, the inverter being connected to a motor (10) that includes one or more armature windings (11) that have a neutral point. The switch unit includes a fourth switch (SW4) mounted on a bypass path (60) connecting between the neutral point of the one or more armature windings of the motor and the negative terminal of the second power storage. The switch controller is configured to selectably set, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line. The switch controller is configured to turn off or maintain in the off state each of the first-A switch, the third-A switch, the third-B switch, and the fourth switch and turn on or maintain in the on state each of the first-B switch, the second-A switch, and the second-B switch to set the connection mode of the power storages to the first series-connection mode. The switch controller is configured to turn off or maintain in the off state each of the second-B switch, the third-A switch, and the third-B switch and turn on or maintain in the on state each of the first-A switch, the first-B switch, the second-A switch, and the fourth switch to set the connection mode of the power storages to the first parallel-connection mode.

### [FEATURE 16]

The power supply system of the feature 16, which depends from any one of the feature 3 to the feature 15, further includes a low-voltage power supply unit (80) configured to supply power to the low-side power supply line, and an anomaly determiner configured to determine whether there is an anomaly in power supply from the low-voltage power supply unit to the low-side power supply line. The switch controller is configured to set the connection mode of the power storages from the first connection mode to the second connection mode when the anomaly determiner determines that there is an anomaly in the power supply from the low-voltage power supply unit to the low-side power supply line while the connection mode of the power storages is set to the first connection mode.

### [FEATURE 17]

The power supply system of the feature 17, which depends from any one of the feature 3 to the feature 16, further includes a load controller configured to limit, during the first connection mode of the power storages, a voltage inputted to the high-voltage load to which power is supplied from the power supply system before the connection mode of the power storages is changed from the first connection mode to the second connection mode, wherein the switch controller is configured to set the connection mode of the power storages from the first connection mode to the second connection mode after the voltage to the high-voltage load is limited by the load controller.

### [FEATURE 18]

In the power supply system of the feature 18, which depends from any one of the feature 3 to the feature 17, an inverter and a smoothing capacitor are connected to the high-side power supply line, the power supply system further comprising an inverter controller configured to control the inverter. The switch controller is configured to cut off power supply between the high-side power supply line and the power storages, and thereafter change the connection mode of the power storages from the first connection mode to the second connection mode. The inverter controller is configured to control the inverter during power-supply cutoff between the high-side power supply line and the power storages to discharge the smoothing capacitor, thus adjusting a voltage across the smoothing capacitor.

### [FEATURE 19]

The power supply system of the feature 19, which depends from any one of the feature 3 to the feature 18, further includes an estimation unit configured to estimate a power storage state of each of the batteries, and a charge/discharge controller configured to perform one of charging and discharging of the at least one power storage connected to the low-side power supply line to approach the power storage states of the batteries in response to determination that (i) an absolute difference in power storage state between the at least one power storage connected to the low-side power supply line and the at least one remaining power storage is greater than or equal to a predetermined difference threshold during the second connection mode of the power storages or (ii) the power storage state of the least one power storage connected to the low-side power supply line is outside a predetermined range.

### [FEATURE 20]

The power supply system of the feature 20, which depends from the feature 19, further includes a voltage converter having a voltage boosting function. The charge/discharge controller is configured to, when performing discharging of the at least one power storage connected to the low-side power supply line to approach the power storage states of the batteries to one another during the second connection mode of the power storages, instruct the voltage converter to boost output power of the at least one power storage connected to the low-side power supply line and supply power boosted by the voltage converter to the high-side power supply line.

### [FEATURE 21]

The power supply system of the feature 21, which depends from the feature 19, further includes a voltage converter having a voltage stepdown function. The charge/discharge controller is configured to, when performing discharging of the at least one power storage connected to the low-side power supply line to approach the power storage states of the batteries to one another during the second connection mode of the power storages, instruct the voltage converter to step down power inputted thereto from the at least one remaining power storage connected to the high-side power supply line and charge the at least one power storage connected to the low-side power supply line based on power stepped down by the voltage converter.

### [FEATURE 22]

The power supply system of the feature 22, which depends from any one of the features 3 to 19, further includes a voltage converter configured to (i) step down power inputted thereto from the at least one remaining power storage connected to the high-side power supply line during the first connection mode of the power storages to supply stepped-down power to the low-side power supply line, and (ii) stop supply of the stepped-down power to the low-side power supply line after the connection mode of the power storages has been changed from the first connection mode to the second connection mode.

### [FEATURE 23]

The power supply system of the feature 23, which depends from any one of the features 3 to 19, further includes a voltage converter configured to (i) step down power inputted thereto from the at least one remaining power storage connected to the high-side power supply line during the first connection mode of the power storages to supply stepped-down power to the low-side power supply line, and (ii) start supply of the stepped-down power to the low-side power supply line after the connection mode of the power storages has been changed from the third connection mode to the second connection mode.

### [FEATURE 24]

The power supply system of the feature 24, which depends from any one of the features 3 to 23, further includes a consumed power monitor configured to monitor consumed power of the low-voltage load. The switch controller is configured to set the connection mode of the power storages to the first connection mode or the second connection mode in response to determination that the consumed power monitored by the consumed power monitor has exceeded a predetermined power threshold during the third connection mode of the power storages.

### [Feature 25]

The power supply system according to any one of the features 3 to 23 further includes a consumed power monitor configured to monitor consumed power of the low-voltage load. The switch controller is configured to set the connection mode of the power storages to the third connection mode in response to determination that the consumed power monitored by the consumed power monitor is lower than or equal to a predetermined power threshold during the first connection mode of the power storages.

### [FEATURE 26]

A program product of the feature 26 is applicable to a power supply system connected to both (i) a high-side power supply line (H1) connected to a high-voltage load (71) and (ii) a low-side power supply line (H2) connected to a low-voltage load (72). The power supply system includes a control apparatus. The program product includes program instructions that cause the control apparatus to perform a switching routine that controls a switch unit for connection-mode switching of the power storages to accordingly set a connection mode of the power storages to one of (i) a first connection mode in which a part or all of the power storages is connected between the high-side power supply line and a low-side ground line (L1), and (ii) a third connection mode in which power supply between the high-side ground line and a low-side ground line (L2) is cut off and a part of the power storages is connected between the low-side power supply line and the low-side ground line.

### [FEATURE 27]

In the program product of the feature 27, which depends from the feature 26, the switching routine selectably sets, as the first switching mode, the connection mode of the power storages to one of (i) a first series-connection mode in which the power storages are connected in series to the high-side power supply line, and (ii) a first parallel-connection mode in which the power storages are connected in parallel to the high-side power supply line.

### [FEATURE 28]

In the program product of the feature 28, which depends from the feature 26 or 27, the power supply system includes a low-voltage power supply unit for supplying power to the low-side power supply line. The program instructions cause the control apparatus to perform an anomaly determination step of determining whether there is an anomaly in power supply from the low-voltage power supply unit to the low-side power supply line. The switching routine sets the connection mode of the power storages to the third connection mode when the anomaly determination step determines that there is an anomaly in the power supply from the low-voltage power supply unit to the low-side power supply line while the connection mode of the power storages is set to the first connection mode.

While illustrative embodiments of the present disclosure have been described herein, the present disclosure is not limited to the embodiments described herein or disclosed configurations, but includes various modifications and adaptations and/or alternations within the equivalent scope of the descriptions. Additionally, various combinations, embodiments, combinations to which only one element or plural elements have been added, or modified embodiments to which only one element or plural elements have been added are within the category or scope of the present disclosure.

## Claims

1. A power supply system (30, 230, 330, 430) connected to both (i) a high-side power supply line (H1) connected to a high-voltage load (71) and (ii) a low-side power supply line (H2) connected to a low-voltage load (72), the power supply system comprising:
a plurality of power storages (31, 32, 33);
a switch unit (SWs) for connection-mode switching of the power storages; and
a switch controller (100) configured to control the switch unit to set a connection mode of the power storages to one of:
a first connection mode in which a part or all of the power storages is connected between the high-side power supply line and a low-side ground line (L1); and
a third connection mode in which power supply between the high-side ground line and a low-side ground line (L2) is cut off and a part of the power storages is connected between the low-side power supply line and the low-side ground line.

2. The power supply system according to claim 1, wherein:
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line.

3. The power supply system according to claim 1, wherein:
the switch controller is configured to control the switch unit to set the connection mode of the power storages to a second connection mode in which at least one power storage of the power storages is connected between the low-side power supply line and the low-side ground line and at least one remaining power storage of the power storages is connected between the high-side power supply line and the high-side ground line, so that the high-side ground line and the low-side ground line are electrically isolated from one another.

4. The power supply system according to claim 3, wherein:
the power storages include a first power storage (31), a second power storage (32) lower in voltage than the first power storage, and a third power storage (33) connected in series to the second power storage, each of the first, second, and third power storages having a positive terminal and a negative terminal;
the switch unit includes:
a first-A switch (SW1a) mounted on a first-A electrical path (1A) connecting between the positive terminal of the first power storage and the high-side power supply line;
a first-B switch (SW1b) mounted on a first-B electrical path (1B) connecting between the negative terminal of the first power storage and the high-side ground line, the second power storage and the third power storage being connected in series to one another to constitute a first series-connection module (40) that has a positive terminal and a negative terminal;
a second-A switch (SW2a, SW5) configured to switch between electrical connection and electrical cutoff of a second-A electrical path (2A), the second-A electrical path (2A) connecting between the positive terminal of the first series-connection module and the negative terminal of the first power storage;
a second-B switch (SW2b) mounted on a second-B electrical path (2B) connecting between the negative terminal of the first series-connection module and the high-side ground line;
a third-A switch (SW3a) mounted on a third-A electrical path (3A) connecting between the positive terminal of the second power storage and the low-side power supply line; and
a third-B switch (SW3b) mounted on a third-B electrical path (3B) connecting between the negative terminal of the second power storage and the low-side ground line; and
the switch controller is configured to:
turn off or maintain in an off state each of the first-B switch, the third-A switch, and the third-B switch and turn on or maintain in an on state each of the first-A switch, the second-A switch, and the second-B switch to set the connection mode of the power storages to the first connection mode; and
turn off or maintain in the off state each of the second-A switch and the second-B switch and turn on or maintain in the on state each of the first-A switch, the first-B switch, the third-A switch, and the third-B switch to set the connection mode of the power storages to the second connection mode.

5. The power supply system according to claim 4, wherein:
the power supply system is connected to an inverter (20) through the high-side power supply line and the high-side ground line, the inverter being connected to a motor (10) that includes one or more armature windings (11) that have a neutral point;
the switch unit includes a fourth switch (SW4) mounted on a bypass path (60) connecting between the neutral point of the one or more armature windings of the motor and the positive terminal of the first series-connection module;
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line; and
the switch controller is configured to:
turn off or maintain in the off state each of the first-B switch, the third-A switch, the third-B switch, and the fourth switch and turn on or maintain in the on state each of the first-A switch, the second-A switch, and the second-B switch to set the connection mode of the power storages to the first series-connection mode; and
turn off or maintain in the off state each of the second-A switch, the third-A switch, and the third-B switch and turn on or maintain in the on state each of the first-A switch, the first-B switch, the second-B switch, and the fourth switch to set the connection mode of the power storages to the first parallel-connection mode.

6. The power supply system according to claim 4, wherein:
the switch unit includes a fourth switch (SW4) mounted on a bypass path (160) connecting between the positive terminal of the first series-connection module and the high-side power supply line;
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line; and
the switch controller is configured to:
turn off or maintain in the off state each of the first-B switch, the third-A switch, the third-B switch, and the fourth switch and turn on or maintain in the on state each of the first-A switch, the second-A switch, and the second-B switch to set the connection mode of the power storages to the first series-connection mode; and
turn off or maintain in the off state each of the second-A switch, the third-A switch, and the third-B switch and turn on or maintain in the on state each of the first-A switch, the first-B switch, the second-B switch, and the fourth switch to set the connection mode of the power storages to the first parallel-connection mode.

7. The power supply system according to claim 3, wherein:
the power storages include a first power storage (31), a second power storage (32) lower in voltage than the first power storage, and a third power storage (33) connected in series to the second power storage, each of the first, second, and third power storages having a positive terminal and a negative terminal;
the switch unit includes:
a first-A switch (SW1a) mounted on a first-A electrical path (1A) connecting between the positive terminal of the first power storage and the high-side power supply line;
a first-B switch (SW1b) mounted on a first-B electrical path (1B) connecting between the negative terminal of the first power storage and the high-side ground line, the second power storage and the third power storage being connected in series to one another to constitute a first series-connection module (40) that has a positive terminal and a negative terminal;
a second-A switch (SW2a, SW5) configured to switch between electrical connection and electrical cutoff of a second-A electrical path (2A), the second-A electrical path (2A) connecting between the positive terminal of the first series-connection module and the high-side power supply line;
a second-B switch (SW2b) mounted on a second-B electrical path (2B) connecting between the negative terminal of the first series-connection module and the positive terminal of the first power storage;
a third-A switch (SW3a) mounted on a third-A electrical path (3A) connecting between the positive terminal of the second power storage and the low-side power supply line; and
a third-B switch (SW3b) mounted on a third-B electrical path (3B) connecting between the negative terminal of the second power storage and the low-side ground line; and
the switch controller is configured to:
turn off or maintain in an off state each of the first-A switch, the third-A switch, and the third-B switch and turn on or maintain in an on state each of the first-B switch, the second-A switch, and the second-B switch to set the connection mode of the power storages to the first connection mode; and
turn off or maintain in the off state each of the second-A switch and the second-B switch and turn on or maintain in the on state each of the first-A switch, the first-B switch, the third-A switch, and the third-B switch to set the connection mode of the power storages to the second connection mode.

8. The power supply system according to claim 7, wherein:
the power supply system is connected to an inverter (20) through the high-side power supply line and the high-side ground line, the inverter being connected to a motor (10) that includes one or more armature windings (11) that have a neutral point;
the switch unit includes a fourth switch (SW4) mounted on a bypass path (60) connecting between the neutral point of the one or more armature windings of the motor and the negative terminal of the first series-connection module;
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line; and
the switch controller is configured to:
turn off or maintain in the off state each of the first-A switch, the third-A switch, the third-B switch, and the fourth switch and turn on or maintain in the on state each of the first-B switch, the second-A switch, and the second-B switch to set the connection mode of the power storages to the first series-connection mode; and
turn off or maintain in the off state each of the second-B switch, the third-A switch, and the third-B switch and turn on or maintain in the on state each of the first-A switch, the first-B switch, the second-A switch, and the fourth switch to set the connection mode of the power storages to the first parallel-connection mode.

9. The power supply system according to claim 7, wherein:
the switch unit includes a fourth switch (SW4) mounted on a bypass path (160) connecting between the negative terminal of the first series-connection module and the high-side ground line;
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line; and
the switch controller is configured to:
turn off or maintain in the off state each of the first-A switch, the third-A switch, the third-B switch, and the fourth switch and turn on or maintain in the on state each of the first-B switch, the second-A switch, and the second-B switch to set the connection mode of the power storages to the first series-connection mode; and
turn off or maintain in the off state each of the second-B switch, the third-A switch, and the third-B switch and turn on or maintain in the on state each of the first-A switch, the first-B switch, the second-A switch, and the fourth switch to set the connection mode of the power storages to the first parallel-connection mode.

10. The power supply system according to claim 3, wherein:
the power storages include a first power storage (31), a second power storage (32) lower in voltage than the first power storage, and a third power storage (33) connected in series to the second power storage, each of the first, second, and third power storages having a positive terminal and a negative terminal;
the switch unit includes:
a first-A switch (SW1a) mounted on a first-A electrical path (1A) connecting between the positive terminal of the first power storage and the high-side power supply line;
a first-B switch (SW1b) mounted on a first-B electrical path (1B) connecting between the negative terminal of the first power storage and the high-side ground line, the second power storage and the third power storage being connected in series to one another to constitute a first series-connection module (40) that has a positive terminal and a negative terminal;
a second-A switch (SW2a, SW5) configured to switch between electrical connection and electrical cutoff of a second-A electrical path (2A), the second-A electrical path (2A) connecting between the positive terminal of the first series-connection module and the high-side power supply line;
a second-B switch (SW2b) mounted on a second-B electrical path (2B) connecting between the negative terminal of the first series-connection module and the high-side ground line;
a third-A switch (SW3a) mounted on a third-A electrical path (3A) connecting between the positive terminal of the second power storage and the low-side power supply line; and
a third-B switch (SW3b) mounted on a third-B electrical path (3B) connecting between the negative terminal of the second power storage and the low-side ground line; and
the switch controller is configured to:
turn off or maintain in an off state each of the third-A switch and the third-B switch and turn on or maintain in an on state each of the first-A switch, the first-B switch, the second-A switch, and the second-B switch to set the connection mode of the power storages to the first connection mode; and
turn off or maintain in the off state each of the second-A switch and the second-B switch and turn on or maintain in the on state each of the first-A switch, the first-B switch, the third-A switch, and the third-B switch to set the connection mode of the power storages to the second connection mode.

11. The power supply system according to claim 3, wherein:
the high-side power supply line includes a first high-side power supply line (H401) and a second high-side power supply line (H402);
the high-side ground line includes a first high-side ground line (L401) and a second low-side ground line (L402);
the power storages include a first power storage (31), a second power storage (32) lower in voltage than the first power storage, and a third power storage (33) connected in series to the second power storage, each of the first, second, and third power storages having a positive terminal and a negative terminal;
the power supply system is connected to a first inverter (420a) through the first high-side power supply line, a motor (10) including one or more armature windings (11), each of which has a first end and a second end, the first inverter being connected to the first ends of the one or more armature windings of the motor, the power supply system being configured to transmit power between the first inverter and the first power storage;
the power supply system is connected to a second inverter (420b) through the second high-side power supply line, the second inverter being connected to the second ends of the one or more armature windings of the motor, the second power storage and the third power storage being connected in series to one another to constitute a first series-connection module (40) that has a positive terminal and a negative terminal, the power supply system being configured to transmit power between the second inverter and the first series-connection module;
the switch unit includes:
a first-A switch (SW1a) mounted on a first-A electrical path (1A) connecting between the positive terminal of the first power storage and the first high-side power supply line;
a first-B switch (SW1b) mounted on a first-B electrical path (1B) connecting between the negative terminal of the first power storage and the first high-side ground line;
a second-A switch (SW2a, SW5) configured to switch between electrical connection and electrical cutoff of a second-A electrical path (2A), the second-A electrical path (2A) connecting between the positive terminal of the first series-connection module and the second high-side power supply line;
a second-B switch (SW2b) mounted on a second-B electrical path (2B) connecting between the negative terminal of the first series-connection module and the second high-side ground line;
a third-A switch (SW3a) mounted on a third-A electrical path (3A) connecting between the positive terminal of the second power storage and the low-side power supply line; and
a third-B switch (SW3b) mounted on a third-B electrical path (3B) connecting between the negative terminal of the second power storage and the low-side ground line; and
the switch controller is configured to:
turn off or maintain in an off state each of the third-A switch and the third-B switch and turn on or maintain in an on state each of the first-A switch, the first-B switch, the second-A switch, and the second-B switch to set the connection mode of the power storages to the first connection mode; and
turn off or maintain in the off state each of the second-A switch and the second-B switch and turn on or maintain in the on state each of the first-A switch, the first-B switch, the third-A switch, and the third-B switch to set the connection mode of the power storages to the second connection mode.

12. The power supply system according to claim 3, wherein:
the power storages include a first power storage (31) and a second power storage (32) lower in voltage than the first power storage, each of the first and second power storages having a positive terminal and a negative terminal;
the switch unit includes:
a first-A switch (SW1a) mounted on a first-A electrical path (1A) connecting between the positive terminal of the first power storage and the high-side power supply line;
a first-B switch (SW1b) mounted on a first-B electrical path (1B) connecting between the negative terminal of the first power storage and the high-side ground line;
a second-A switch (SW2a, SW5) configured to switch between electrical connection and electrical cutoff of a second-A electrical path (2A), the second-A electrical path (2A) connecting between the positive terminal of the second power storage and the negative terminal of the first power storage;
a second-B switch (SW2b) mounted on a second-B electrical path (2B) connecting between the negative terminal of the second power storage and the high-side ground line;
a third-A switch (SW3a) mounted on a third-A electrical path (3A) connecting between the positive terminal of the second power storage and the low-side power supply line; and
a third-B switch (SW3b) mounted on a third-B electrical path (3B) connecting between the negative terminal of the second power storage and the low-side ground line; and
the switch controller is configured to:
turn off or maintain in an off state each of the first-B switch, the third-A switch, and the third-B switch and turn on or maintain in an on state each of the first-A switch, the second-A switch, and the second-B switch to set the connection mode of the power storages to the first connection mode; and
turn off or maintain in the off state each of the second-A switch and the second-B switch and turn on or maintain in the on state each of the first-A switch, the first-B switch, the third-A switch, and the third-B switch to set the connection mode of the power storages to the second connection mode.

13. The power supply system according to claim 12, wherein:
the power supply system is connected to an inverter (20) through the high-side power supply line and the high-side ground line, the inverter being connected to a motor (10) that includes one or more armature windings (11) that have a neutral point;
the switch unit includes a fourth switch (SW4) mounted on a bypass path (60) connecting between the neutral point of the one or more armature windings of the motor and the positive terminal of the second power storage;
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line; and
the switch controller is configured to:
turn off or maintain in the off state each of the first-B switch, the third-A switch, the third-B switch, and the fourth switch and turn on or maintain in the on state each of the first-A switch, the second-A switch, and the second-B switch to set the connection mode of the power storages to the first series-connection mode; and
turn off or maintain in the off state each of the second-A switch, the third-A switch, and the third-B switch and turn on or maintain in the on state each of the first-A switch, the first-B switch, the second-B switch, and the fourth switch to set the connection mode of the power storages to the first parallel-connection mode.

14. The power supply system according to claim 3, wherein:
the power storages include a first power storage (31) and a second power storage (32) lower in voltage than the first power storage, each of the first and second power storages having a positive terminal and a negative terminal;
the switch unit includes:
a first-A switch (SW1a) mounted on a first-A electrical path (1A) connecting between the positive terminal of the first power storage and the high-side power supply line;
a first-B switch (SW1b) mounted on a first-B electrical path (1B) connecting between the negative terminal of the first power storage and the high-side ground line;
a second-A switch (SW2a) mounted on a second-A electrical path (2A) connecting between the positive terminal of the second power storage and the high-side power supply line;
a second-B switch (SW2b) mounted on a second-B electrical path (2B) connecting between the negative terminal of the second power storage and the positive terminal of the first power storage;
a third-A switch (SW3a) mounted on a third-A electrical path (3A) connecting between the positive terminal of the second power storage and the low-side power supply line; and
a third-B switch (SW3b) mounted on a third-B electrical path (3B) connecting between the negative terminal of the second power storage and the low-side ground line; and
the switch controller is configured to:
turn off or maintain in an off state each of the first-A switch, the third-A switch, and the third-B switch and turn on or maintain in an on state each of the first-B switch, the second-A switch, and the second-B switch to set the connection mode of the power storages to the first connection mode; and
turn off or maintain in the off state each of the second-A switch and the second-B switch and turn on or maintain in the on state each of the first-A switch, the first-B switch, the third-A switch, and the third-B switch to set the connection mode of the power storages to the second connection mode.

15. The power supply system according to claim 14, wherein:
the power supply system is connected to an inverter (20) through the high-side power supply line and the high-side ground line, the inverter being connected to a motor (10) that includes one or more armature windings (11) that have a neutral point;
the switch unit includes a fourth switch (SW4) mounted on a bypass path (60) connecting between the neutral point of the one or more armature windings of the motor and the negative terminal of the second power storage;
the switch controller is configured to selectably set, as the first switching mode, the connection mode of the power storages to one of:
a first series-connection mode in which the power storages are connected in series to the high-side power supply line; and
a first parallel-connection mode in which the power storages are connected in parallel to the high-side power supply line; and
the switch controller is configured to:
turn off or maintain in the off state each of the first-A switch, the third-A switch, the third-B switch, and the fourth switch and turn on or maintain in the on state each of the first-B switch, the second-A switch, and the second-B switch to set the connection mode of the power storages to the first series-connection mode; and
turn off or maintain in the off state each of the second-B switch, the third-A switch, and the third-B switch and turn on or maintain in the on state each of the first-A switch, the first-B switch, the second-A switch, and the fourth switch to set the connection mode of the power storages to the first parallel-connection mode.

16. The power supply system according to any one of claims 3 to 15, further comprising:
a low-voltage power supply unit (80) configured to supply power to the low-side power supply line; and
an anomaly determiner configured to determine whether there is an anomaly in power supply from the low-voltage power supply unit to the low-side power supply line, wherein:
the switch controller is configured to set the connection mode of the power storages from the first connection mode to the second connection mode when the anomaly determiner determines that there is an anomaly in the power supply from the low-voltage power supply unit to the low-side power supply line while the connection mode of the power storages is set to the first connection mode.

17. The power supply system according to any one of claims 3 to 15, further comprising:
a load controller configured to limit, during the first connection mode of the power storages, a voltage inputted to the high-voltage load to which power is supplied from the power supply system before the connection mode of the power storages is changed from the first connection mode to the second connection mode, wherein:
the switch controller is configured to set the connection mode of the power storages from the first connection mode to the second connection mode after the voltage to the high-voltage load is limited by the load controller.

18. The power supply system according to any one of claims 3 to 15, wherein an inverter and a smoothing capacitor are connected to the high-side power supply line, the power supply system further comprising an inverter controller configured to control the inverter,
the switch controller being configured to cut off power supply between the high-side power supply line and the power storages, and thereafter change the connection mode of the power storages from the first connection mode to the second connection mode,
the inverter controller being configured to control the inverter during power-supply cutoff between the high-side power supply line and the power storages to discharge the smoothing capacitor, thus adjusting a voltage across the smoothing capacitor.

19. The power supply system according to any one of claims 3 to 15, further comprising:
an estimation unit configured to estimate a power storage state of each of the batteries; and
a charge/discharge controller configured to perform one of charging and discharging of the at least one power storage connected to the low-side power supply line to approach the power storage states of the batteries in response to determination that:
(i) an absolute difference in power storage state between the at least one power storage connected to the low-side power supply line and the at least one remaining power storage is greater than or equal to a predetermined difference threshold during the second connection mode of the power storages or
(ii) the power storage state of the least one power storage connected to the low-side power supply line is outside a predetermined range.

20. The power supply system according to claim 19, further comprising:
a voltage converter having a voltage boosting function, wherein:
the charge/discharge controller is configured to, when performing discharging of the at least one power storage connected to the low-side power supply line to approach the power storage states of the batteries to one another during the second connection mode of the power storages, instruct the voltage converter to boost output power of the at least one power storage connected to the low-side power supply line and supply power boosted by the voltage converter to the high-side power supply line.

21. The power supply system according to claim 19, further comprising:
a voltage converter having a voltage stepdown function, wherein:
the charge/discharge controller is configured to, when performing discharging of the at least one power storage connected to the low-side power supply line to approach the power storage states of the batteries to one another during the second connection mode of the power storages, instruct the voltage converter to step down power inputted thereto from the at least one remaining power storage connected to the high-side power supply line and charge the at least one power storage connected to the low-side power supply line based on power stepped down by the voltage converter.

22. The power supply system according to any one of claims 3 to 15, further comprising:
a voltage converter configured to:
step down power inputted thereto from the at least one remaining power storage connected to the high-side power supply line during the first connection mode of the power storages to supply stepped-down power to the low-side power supply line; and
stop supply of the stepped-down power to the low-side power supply line after the connection mode of the power storages has been changed from the first connection mode to the second connection mode.

23. The power supply system according to any one of claims 3 to 15, further comprising:
a voltage converter configured to:
step down power inputted thereto from the at least one remaining power storage connected to the high-side power supply line during the first connection mode of the power storages to supply stepped-down power to the low-side power supply line; and
start supply of the stepped-down power to the low-side power supply line after the connection mode of the power storages has been changed from the third connection mode to the second connection mode.

24. The power supply system according to any one of claims 3 to 15, further comprising:
a consumed power monitor configured to monitor consumed power of the low-voltage load, wherein:
the switch controller is configured to set the connection mode of the power storages to the first connection mode or the second connection mode in response to determination that the consumed power monitored by the consumed power monitor has exceeded a predetermined power threshold during the third connection mode of the power storages.

25. The power supply system according to any one of claims 3 to 15, further comprising:
a consumed power monitor configured to monitor consumed power of the low-voltage load, wherein:
the switch controller is configured to set the connection mode of the power storages to the third connection mode in response to determination that the consumed power monitored by the consumed power monitor is lower than or equal to a predetermined power threshold during the first connection mode of the power storages.

26. A program product applicable to a power supply system connected to both (i) a high-side power supply line (H1) connected to a high-voltage load (71) and (ii) a low-side power supply line (H2) connected to a low-voltage load (72), the power supply system comprising a control apparatus, the program product comprising program instructions that cause the control apparatus to perform a switching routine that controls a switch unit for connection-mode switching of the power storages to accordingly set a connection mode of the power storages to one of:
a first connection mode in which a part or all of the power storages is connected between the high-side power supply line and a low-side ground line (L1); and
a third connection mode in which power supply between the high-side ground line and a low-side ground line (L2) is cut off and a part of the power storages is connected between the low-side power supply line and the low-side ground line.

27. The program product according to claim 26, wherein:
the switching routine selectably sets, as the first switching mode, the connection mode of the power storages to one of:
a first series-connection mode in which the power storages are connected in series to the high-side power supply line; and
a first parallel-connection mode in which the power storages are connected in parallel to the high-side power supply line.

28. The program product according to claim 26 or 27, wherein:
the power supply system includes a low-voltage power supply unit for supplying power to the low-side power supply line;
the program instructions cause the control apparatus to perform an anomaly determination step of determining whether there is an anomaly in power supply from the low-voltage power supply unit to the low-side power supply line; and
the switching routine sets the connection mode of the power storages to the third connection mode when the anomaly determination step determines that there is an anomaly in the power supply from the low-voltage power supply unit to the low-side power supply line while the connection mode of the power storages is set to the first connection mode.
